(19) **Europäisches Patentamt / European Patent Office / Office européen des brevets**

(11) **EP 4 610 913 A1**

(12) # EUROPEAN PATENT APPLICATION

(43) Date of publication:
03.09.2025 Bulletin 2025/36

(21) Application number: 25160427.8

(22) Date of filing: 26.02.2025

(51) International Patent Classification (IPC):
*G06Q 20/40* (2012.01)    *G06N 3/084* (2023.01)
*G06N 20/00* (2019.01)

(52) Cooperative Patent Classification (CPC):
G06N 3/084; G06N 20/00; G06Q 20/4016

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.03.2024 IN 202441015506

(71) Applicant: Mastercard International Incorporated
Purchase NY 10577 (US)

(72) Inventors:
• TIWARI, Darshika
Gurgaon, Haryana (IN)
• RAI, Aditi
Bina, Madhya Pradesh (IN)
• PANDEY, Anubha
Bikaner (IN)

• STACY-NIETO, Athena
Edingurg, Texas (US)
• AGARWAL, Ayush
Roorkee (IN)
• MCCROW, John
Huntersville, North Carolina (US)
• VUSSE, Lekhana
Rajahmundry, Andhra Pradesh (IN)
• SINGH, Maneet
New Delhi, Delhi (IN)
• SANTHAPUR, Meghana
Lake Saint Louis, Missouri (US)
• GOEL, Samarth
Gugugram, Haryana (IN)
• SOMAVARAPU, Tarun
Hyderabad, Telangana (IN)

(74) Representative: Barker Brettell LLP
100 Hagley Road
Edgbaston
Birmingham B16 8QQ (GB)

(54) **METHODS AND SYSTEMS FOR DETERMINING POTENTIAL RETURN TRANSACTIONS**

(57) Methods and server systems for determining potential return transactions. Method performed by server system includes receiving an authorization request. The authorization request includes a plurality of ongoing payment transaction attributes. Method includes accessing historical payment transaction datasets. Method includes generating a plurality of features for the cardholder. Method includes generating the first return probability score associated with the ongoing payment transaction. The first return probability score indicates a likelihood of the ongoing payment transaction being associated with a return request. Method includes determining a first return advice code based on the first return probability score and a set of predefined threshold values. Method includes facilitating transmission of an authorization response message includes the return advice code to an acquirer server.

FIG. 3

EP 4 610 913 A1

## Description

### TECHNICAL FIELD

The present disclosure relates to artificial intelligence-based processing systems and, more particularly, to electronic methods and complex processing systems for determining or predicting potential return transactions, *i.e.*, transactions for products that may be returned in the future in exchange for a partial or full refund.

### BACKGROUND

With the rapid growth in e-commerce and buyer-friendly product return policies, it has become very easy for buyers to return their previously purchased products either in an intact or a damaged state to the seller or merchant, in exchange for a full or partial refund. In today's competitive market, to improve user/cardholder experience, most e-commerce companies have come up with hassle-free return policies. For instance, cardholders (*i.e.*, buyers) are usually allowed to return a product within a specified time period, for example, within a week or a month in exchange for a partial or full refund. These liberal return policies have improved buyer engagement, revenue, purchase rate, buyer experience, and repeat buying behavior. As would be readily apparent, such easy return policies can easily be exploited by a small subset of buyers, who might ask for refunds at a very high scale and the cost of handling such returned products as a result of such return transactions poses a significant challenge for merchants. To that end, the promise of easy returns also comes with an inevitably high return rate. Further, recent studies have shown that the return rate has been increasing at an alarming rate every year. For instance, in the fashion industry, major fashion e-commerce platforms face high return rates due to sizing and fitment issues.

It is reiterated that merchants incur huge losses in terms of reverse logistics costs, and liquidation costs due to damaged returns or fraudulent return behavior. In a particular commonly observed scenario, if a merchant has a lenient return policy, a cardholder may return the previously purchased products after using or damaging them to a point that does not meet the quality norms of re-selling the products. In another exemplary scenario, merchants may also have to take care of the logistics costs associated with delivering and returning the products as well. It is understood that this movement of products is extremely energy intensive, therefore, if this process is exploited by cardholders, the logistics of this return process is very polluting which impacts the environment negatively while undermining any sustainability initiatives or goals of the merchant as well. Therefore, product returns also impact other segments of a merchant's business as well such as buyer experience, supply chain management, call center demand, inventory, and buyer service. To that end, accurate prediction of product returns is critical for any merchant such that proper planning and preemptive measures may be taken to reduce either the overall returns or the impact of such returns on the merchant.

Many conventional approaches have been developed to combat the drawbacks of the high return rates and associated issues as described earlier. These conventional approaches predict the return rate at a product level using the data derived from the merchant's platform using machine learning algorithms. It is to be noted that, machine learning plays a significant role in the e-commerce industry, revolutionizing how businesses operate, improving buyer experiences, and optimizing various processes providing product recommendations, fraud detection, Natural Language Processing (NLP) for customer service, etc. Additionally, the approaches provide insights into personal consumption patterns using large-scale feature extraction.

As may be understood, these conventional approaches provide predictions related to the returns done by the cardholders at a particular merchant based on the already-done transaction details obtained from the associated database. However, such solutions are only limited to situations where a cardholder who has already been identified as a serial returnee by a merchant is transacting at the same merchant again. In other words, these predictions are done at a particular merchant level and cannot be used to help other merchants in a payment ecosystem. It is to be noted that, due to this problem the conventional approaches do not provide efficient methods to predict the return rate at the transaction level.

Thus, there exists a technological need for a more robust, automated, and efficient approach to predict potential returns.

### SUMMARY

Various embodiments of the present disclosure provide methods and systems for determining or predicting potential return transactions.

In an embodiment, a computer-implemented method to predict potential return transactions is disclosed. The computer-implemented method performed by a server system includes receiving an authorization request associated with an ongoing payment transaction initiated by a cardholder with a merchant. Herein, the authorization request includes a plurality of ongoing payment transaction attributes. Further, the method includes accessing a historical payment transaction dataset from a database associated with the server system. Herein, the historical payment transaction dataset includes a plurality of transaction attributes related to a plurality of historical payment transactions. Further, the method includes generating a plurality of features for the cardholder based, at least in part, on the plurality of ongoing payment transaction attributes and the plurality of transaction attributes. Additionally, the method includes generating a first return probability score associated with the ongoing payment transaction based, at least in part, on the plurality of features. Herein, the first return probability score indicates a likelihood of the ongoing payment transaction being associated with a return request within a predefined time interval. Additionally, the method includes determining a first return advice code for the ongoing payment transaction based, at least in part, on the first return probability score and a set of predefined threshold values and facilitating transmission of an authorization response message including the return advice code to an acquirer server associated with the merchant.

In another embodiment, a server system is disclosed. The server system includes a communication interface and a memory including executable instructions. The server system also includes a processor communicably coupled to the memory. The processor is configured to execute the instructions to cause the server system, at least in part, to receive an authorization request associated with an ongoing payment transaction initiated by a cardholder with a merchant. The authorization request includes a plurality of ongoing payment transaction attributes. The system is further caused to access a historical payment transaction dataset from a database associated with the server system. Herein, the historical payment transaction dataset includes a plurality of transaction attributes related to a plurality of historical payment transactions. The system is further caused to generate a plurality of features for the cardholder based, at least in part, on the plurality of ongoing payment transaction attributes and the plurality of transaction attributes. The system is further caused to generate a first return probability score associated with the ongoing payment transaction based, at least in part, on the plurality of features. Herein, the first return probability score indicates a likelihood of the ongoing payment transaction being associated with a return request within a predefined time interval. The system is further caused to determine a first return advice code for the ongoing payment transaction based, at least in part, on the first return probability score and a set of predefined threshold values. The system is further caused to facilitate the transmission of an authorization response message including the return advice code to an acquirer server associated with the merchant.

In another embodiment, a computer-implemented method to predict potential return transactions is disclosed. The computer-implemented method performed by a server system includes receiving, a return prediction request for a checkout payment transaction from a merchant. Herein, the return prediction request includes a plurality of checkout attributes. Further, the method includes accessing a historical payment transaction dataset from a database associated with the server system. Herein, the historical payment transaction dataset includes a plurality of transaction attributes related to a plurality of historical payment transactions. Further, the method includes generating a plurality of features for the cardholder based, at least in part, on the plurality of checkout attributes and the plurality of transaction attributes. Additionally, the method includes generating a second return probability score associated with the checkout payment transaction based, at least in part, on the plurality of features. Herein, the second return probability score indicates the likelihood of the checkout payment transaction being associated with a return request within a predefined time interval. Further, the method includes determining a second return advice code for the checkout payment transaction based, at least in part, on the second return probability score and a set of predefined threshold values. Additionally, the method further includes facilitating the transmission of a return prediction response message which includes the second return advice code to an acquirer server associated with the merchant.

In another embodiment, a computer-implemented method to predict potential return transactions is disclosed. The computer-implemented method performed by a server system includes receiving, an upcoming return prediction request from a merchant for one or more upcoming payment transactions to be initiated by a cardholder with the merchant. Further, the method includes accessing a historical payment transaction dataset from a database associated with the server system. Herein, the historical payment transaction dataset includes a plurality of transaction attributes related to a plurality of historical payment transactions. Further, the method includes generating a plurality of features for a cardholder based, at least in part, on the plurality of transaction attributes. Additionally, the method includes generating a third return probability score associated with one or more upcoming payment transactions based, at least in part, on the plurality of features. Herein, the third return probability score indicates a likelihood of one or more upcoming payment transactions being associated with a return request within a predefined time interval. Further, the method includes determining a third return advice code for one or more upcoming payment transactions based, at least in part, on the third return probability score and a set of predefined threshold values. Additionally, the method includes facilitating the transmission of a return prediction response message including the third return advice code to an acquirer server associated with the merchant.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE FIGURES

For a more complete understanding of example embodiments of the present technology, reference is now made to the following descriptions taken in connection with the accompanying drawings in which:

FIG. 1 illustrates an exemplary representation of an environment related to at least some example embodiments of the present disclosure;

FIG. 2 illustrates a simplified block diagram of a server system, in accordance with an embodiment of the present disclosure;

FIG. 3 illustrates a block diagram representation of an exemplary process for generating a page rank, in accordance with an embodiment of the present disclosure;

FIG. 4 illustrates an exemplary representation of an architecture of a return prediction Model, in accordance with an embodiment of the present disclosure;

FIG. 5 illustrates a process flow diagram for predicting returns in a pre-payment scenario using the return prediction model, in accordance with an embodiment of the present disclosure;

FIG. 6 illustrates a process flow diagram for predicting returns in an ongoing-payment scenario using the return prediction model, in accordance with an embodiment of the present disclosure;

FIG. 7 illustrates a process flow diagram for predicting returns in a post-payment scenario using the return prediction model, in accordance with an embodiment of the present disclosure;

FIG. 8 illustrates a process flow diagram depicting a method for predicting whether a cardholder is a serial returnee, in accordance with an embodiment of the present disclosure;

FIG. 9 illustrates a process flow diagram depicting a method for predicting potential returns in an ongoing payment scenario using the return prediction model, in accordance with an embodiment of the present disclosure;

FIG. 10 illustrates a process flow diagram depicting a method for predicting potential returns in a pre-payment scenario using the return prediction model, in accordance with an embodiment of the present disclosure; and

FIG. 11 illustrates a process flow diagram depicting a method for predicting potential returns in a post-payment scenario using the return prediction model, in accordance with an embodiment of the present disclosure.

The drawings referred to in this description are not to be understood as being drawn to scale except if specifically noted, and such drawings are only exemplary in nature.

## DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details.

Reference in this specification to "one embodiment" or "an embodiment" means that a particular feature, structure, or characteristic described in connection with the embodiment is included in at least one embodiment of the present disclosure. The appearance of the phrase "in an embodiment" in various places in the specification does not necessarily all refer to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

Embodiments of the present disclosure may be embodied as an apparatus, a system, a method, or a computer program product. Accordingly, embodiments of the present disclosure may take the form of an entirely hardware embodiment, an entirely software embodiment (including firmware, resident software, micro-code, *etc.*), or an embodiment combining software and hardware aspects that may all generally be referred to herein as a "circuit", "engine", "module", or "system". Furthermore, aspects of the present disclosure may take the form of a computer program product embodied in one or more computer-readable storage media having computer-readable program code embodied thereon.

The terms "account holder", "user", "cardholder", "consumer", and "buyer" are used interchangeably throughout the description and refer to a person who has a payment account or a payment card (*e.g.*, credit card, debit card, *etc.*) associated with the payment account, that will be used by them at a merchant to perform a payment transaction. The payment account may be opened via an issuing bank or an issuer server.

The term "merchant", used throughout the description generally refers to a seller, a retailer, a purchase location, an organization, or any other entity that is in the business of selling goods or providing services, and it can refer to either a single business location or a chain of business locations of the same entity.

The terms "payment network" and "card network" are used interchangeably throughout the description and refer to a network or collection of systems used for the transfer of funds through the use of cash substitutes. Payment networks may use a variety of different protocols and procedures in order to process the transfer of money for various types of transactions. Payment networks are companies that connect an issuing bank with an acquiring bank to facilitate online payment. Transactions that may be performed via a payment network may include product or service purchases, credit purchases, debit transactions, fund transfers, account withdrawals, *etc.* Payment networks may be configured to perform transactions via cash substitutes that may include payment cards, letters of credit, checks, financial accounts, *etc.* Examples of networks or systems configured to perform or function as payment networks include those operated by such as Mastercard®.

The term "payment card", used throughout the description, refers to a physical or virtual card linked with a financial or payment account that may be presented to a merchant or any such facility to fund a financial transaction via the associated payment account. Examples of the payment card include, but are not limited to, debit cards, credit cards, prepaid cards, virtual payment numbers, virtual card numbers, forex cards, charge cards, e-wallet cards, and stored-value cards. A payment card may be a physical card that may be presented to the merchant for funding the payment. Alternatively, or additionally, the payment card may be embodied in the form of data stored in a user device, where the data is associated with a payment account such that the data can be used to process the financial transaction between the payment account and a merchant's financial account.

The term "payment account", used throughout the description refers to a financial account that is used to fund a financial transaction. Examples of financial accounts include, but are not limited to a savings account, a credit account, a checking account, and a virtual payment account. The financial account may be associated with an entity such as an individual person, a family, a commercial entity, a company, a corporation, a governmental entity, a non-profit organization, and the like. In some scenarios, the financial account may be a virtual or temporary payment account that can be mapped or linked to a primary financial account, such as those accounts managed by payment wallet service providers, and the like.

The terms "payment transaction", "financial transaction", "event", and "transaction" are used interchangeably throughout the description and refer to a transaction or transfer of payment of a certain amount being initiated by the cardholder. More specifically, they refer to electronic financial transactions including, for example, online payment, payment at a terminal (*e.g.*, Point of Sale (POS) terminal), and the like. Generally, a payment transaction is performed between two entities, such as a buyer and a seller. It is to be noted that a payment transaction is followed by a payment transfer of a transaction amount (*i.e.*, monetary value) from one entity (*e.g.*, issuing bank associated with the buyer) to another entity (*e.g.*, acquiring bank associated with the seller), in exchange of any goods or services.

OVERVIEW

Various embodiments of the present disclosure provide methods, systems, user devices, and computer program products to predict potential return transactions.

In an embodiment, the server system is a payment server associated with a payment network that is configured to access a training dataset and a transaction-related data from a database associated with the server system.

In another embodiment, the server system is configured to receive an authorization request associated with an ongoing payment transaction initiated by a cardholder with a merchant. In an embodiment, the authorization request includes a plurality of ongoing payment transaction attributes. Further, the server system is configured to access a historical payment transaction dataset from a database associated with the server system. In an embodiment, the historical payment transaction dataset includes a plurality of transaction attributes related to a plurality of historical payment transactions. Further, the server system is configured to generate a plurality of features for the cardholder based, at least in part, on the plurality of ongoing payment transaction attributes and the plurality of transaction attributes. In an embodiment, the plurality of features includes a plurality of transaction amounts, a plurality of transaction types, a merchant category code, a time stamp associated with the transaction, a payment method, a plurality of previous transactions by the cardholder, a location data associated with the transaction.

In an embodiment, the plurality of features includes serial returnee likelihood data for the cardholder. In another embodiment, the server system is configured to compute the serial returnee likelihood data. Herein, the server system is configured to determine a total return amount (R) for the cardholder, and a total purchase amount (P) for the cardholder based, at least in part, on the plurality of transaction attributes related to the plurality of historical payment transactions performed between a plurality of cardholders and a plurality of merchants. Further, the server system is configured to compute a set of ratios of R and P for the plurality of cardholders. In an embodiment, each ratio of R and P of the set of ratios of R and P corresponds to each cardholder of the plurality of cardholders. Further, the server system is configured to extract a set of high ratios of R and P from the set of ratios of R and P based, at least in part, on a value associated with each ratio of R and P being at least equal to a threshold value. Further, the server system is configured to generate a bipartite graph for the plurality of historical payment transactions based, at least in part, on the plurality of transaction attributes and the set of high ratios of R and P. In an embodiment, the bipartite graph includes a first plurality of nodes and a first plurality of edges. Additionally, the first plurality of nodes corresponds to the plurality of cardholders and the plurality of merchants, and the first plurality of edges corresponds to a set of high ratios of R and P. Further, the server system is configured to generate a preference vector for each cardholder based, at least in part, on the set of high ratios of R and P. In an embodiment, the preference vector corresponds to each cardholder indicating the past return behavior of each cardholder at the plurality of merchants. The server system is further configured to generate a merchant correspondence matrix based, at least in part, on the set of high ratios of R and P and the homogeneous merchant graph. Further, the server system is configured to compute serial returnee likelihood data for the cardholder based, at least in part, on the homogeneous merchant graph, the preference vector corresponding to the cardholder, and the merchant correspondence matrix. It is noted that the serial returnee likelihood data indicates a likelihood that the cardholder associated with the ongoing transaction is a serial returnee.

Further, the server system is configured to generate a first return probability score associated with the ongoing payment transaction based, at least in part, on the plurality of features. In an embodiment, the first return probability score indicates a likelihood of the ongoing payment transaction being associated with a return request within a predefined time interval. Further, the server system is configured to determine a first return advice code for the ongoing payment transaction based, at least in part, on the first return probability score and a set of predefined threshold values. In an embodiment, the first return advice code is at least one of high risk, moderate risk, and low risk. Further, the server system is configured to facilitate the transmission of an authorization response message including the return advice code to an acquirer server associated with the merchant.

In an embodiment, the server system is configured to train the return prediction model based, at least in part, on performing a set of operations for a plurality of iterations until the performance of the return prediction model converges to a predefined criteria. The set of operations includes initializing the return prediction model based, at least in part, on one or more model parameters. The set of operations further includes generating a plurality of training features based, at least in part, on a training dataset. The training dataset includes a plurality of training transaction attributes related to a plurality of training transactions. The set of operations further includes determining a training return probability score for each training transaction from the plurality of training transactions based, at least in part, on the plurality of training features. The set of operations further includes classifying each training transaction into a return transaction or a non-return transaction based, at least in part, on the training return probability score for each training transaction and a predefined threshold value. The set of operations further includes computing a classification loss for each training transaction based, at least in part, on a loss function and the training dataset. The set of operations further includes optimizing the one or more model parameters based, at least in part, on back-propagating the classification loss.

In another embodiment, the server system is configured to receive a return prediction request for a checkout payment transaction from a merchant. Herein, the return prediction request includes a plurality of checkout attributes. Further, the server system is configured to access a historical payment transaction dataset from a database associated with the server system. Herein, the historical payment transaction dataset includes a plurality of transaction attributes related to a plurality of historical payment transactions. Further, the server system is configured to generate a plurality of features for the cardholder based, at least in part, on the plurality of checkout attributes and the plurality of transaction attributes. Further, the server system is configured to generate a second return probability score associated with the checkout payment transaction based, at least in part, on the plurality of features. Herein, the plurality of features includes serial returnee likelihood data. Herein, the second return probability score indicates the likelihood of the checkout payment transaction being associated with a return request within a predefined time interval. Additionally, the server system is configured to determine a second return advice code for the checkout payment transaction based, at least in part, on the second return probability score and a set of predefined threshold values. Further, the server system is configured to facilitate the transmission of a return prediction response message including the second return advice code to an acquirer server associated with the merchant. Herein, the return prediction request is an Application Programming Interface (API) request and the return prediction response message is an API response. Additionally, the plurality of checkout attributes includes serial returnee likelihood data, a cart value, a total amount of the transaction, a time stamp associated with the transaction, location data associated with the transaction, and the like.

In an embodiment, the server system is further configured to receive an upcoming return prediction request from a merchant for one or more upcoming payment transactions to be initiated by a cardholder with the merchant. Further, the server system is configured to access a historical payment transaction dataset from a database associated with the server system. Herein, the historical payment transaction dataset includes a plurality of transaction attributes related to a plurality of historical payment transactions. Further, the server system is configured to generate a plurality of features for a cardholder based, at least in part, on the plurality of transaction attributes. Further, the server system is configured to generate a third return probability score associated with the one or more upcoming payment transactions based, at least in part, on the plurality of features. Herein, the third return probability score indicates a likelihood of the one or more upcoming payment transactions being associated with a return request within a predefined time interval. Further, the server system is configured to determine a third return advice code for the one or more upcoming payment transactions based, at least in part, on the third return probability score and a set of predefined threshold values. Further, the server system is configured to facilitate the transmission of a return prediction response message including the third return advice code to an acquirer server associated with the merchant.

Various embodiments of the present disclosure offer multiple advantages and technical effects. For instance, the present disclosure aims to solve the technical problem of how to identify potential return transactions. The present disclosure solves this technical problem by providing a machine learning based approach that allows a payment processor to learn insights from transactions taking place at various merchants to identify cardholders with high rate of return within the payment ecosystem.

The present disclosure provides various technical effects such as generating various features that help the return prediction model to learn insights regarding the behavior of the plurality of cardholders. For instance, the serial returnee likelihood data generated using the graph provides a likelihood that the cardholder associated with the ongoing transaction is a serial returnee. This features leads to improved learning of the return prediction model. As described earlier, the first return probability score generated by the return prediction model indicates the likelihood of the ongoing payment transaction being associated with a return request within a predefined time interval. Thus, transmitting the first return advice code to the acquirer associated with the merchant involved in the ongoing transaction with the cardholder helps the merchant to understand whether the said transaction is associated high risk, moderate risk, and low risk. This enables the merchant to make decisions regarding whether to accept or reject the ongoing transaction on their risk tolerance. This aspect of the present disclosure allows merchants to avoid cardholders that are likely to return the purchased goods. Thus, avoiding losses due to reverse logistics costs, and liquidation costs. Further, avoiding the extremely energy intensive reverse logistics for returned goods, which is good for the environment as well. Furthermore, this aspect helps the merchants improve their supply chain management, call center demand, inventory, and buyer service which in turn leads to a good buyer experience for customers with low return risk.

Further, the second return advice code for the checkout payment transaction allows the merchants to understand the likelihood of the checkout payment transaction being associated with a return request within a predefined time interval. This advice code also enables the merchants to avoid cardholders that are likely to return the purchased goods.

Further, the third return advice code for the one or more upcoming payment transactions allows the merchants to understand the likelihood of the one or more upcoming payment transaction being associated with a return request within a predefined time interval. This advice code enables the merchant to preemptively prepare for a future return request thereby, improving their supply chain management which in turn leads to a good buyer experience.

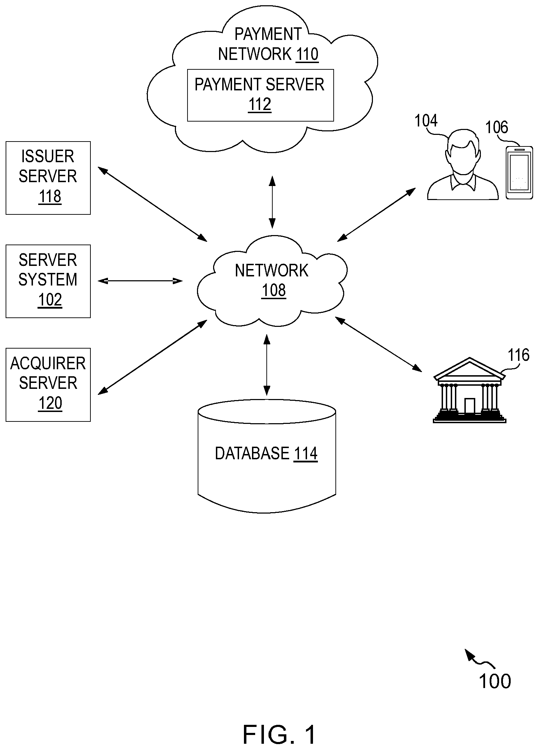

Various embodiments of the present disclosure are described hereinafter with reference to FIGS. 1 to 11.

FIG. 1 illustrates an exemplary representation of an environment 100 related to at least some embodiments of the present disclosure. Although the environment 100 is presented in one arrangement, other embodiments may include the parts of the environment 100 (or other parts) arranged otherwise depending on, for example, predicting a potential return transaction and the like.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, predicting whether a purchase transaction associated with a product will end up being a return or not, and the like. The environment 100 generally includes various entities such as a server system 102, a cardholder 104, a merchant 116, an issuer server 118, an acquirer server 120, a payment network 110 including a payment server 112, and a database 114, each coupled to, and in communication with (and/or with access to) a network 108. The network 108 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among the entities illustrated in FIG. 1, or any combination thereof.

Various entities/components in the environment 100 may connect to the network 108 in accordance with various wired and wireless communication protocols, such as Transmission Control Protocol/Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, future communication protocols or any combination thereof. For example, the network 108 may include multiple different networks, such as a private network made accessible by the server system 102 and a public network (*e.g.*, the Internet, *etc.*) through which the server system 102 may communicate with the database 114.

In an embodiment, the cardholder (*e.g.*, the cardholder 104) may be any individual, representative of a corporate entity, non-profit organization, or any other person who is presenting payment account details during an electronic payment transaction. The cardholder (*e.g.*, the cardholder 104) may have a payment account issued by an issuing bank (not shown in figures). Further, the cardholder 104 may be provided a payment card with financial or other account information encoded onto the payment card such that the cardholder (*i.e.*, the cardholder 104) may use the payment card to initiate and complete a payment transaction using a bank account at the issuing bank.

The cardholder 104 may use their corresponding electronic device 106 to access a mobile application or a website associated with the issuing bank, or any third-party payment application. In various non-limiting examples, the electronic device 106 may refer to any electronic device such as, but not limited to, personal computers (PCs), tablet devices, Personal Digital Assistants (PDAs), voice-activated assistants, Virtual Reality (VR) devices, smartphones, and laptops.

In an embodiment, the merchant 116 may include retail shops, restaurants, e-commerce platforms, supermarkets or establishments, government and/or private agencies, or any such places equipped with POS terminals, where a cardholder such as a cardholder 104 visits for performing the financial transaction in exchange for any goods and/or services or any financial transactions.

In one scenario, the cardholder 104 may use their corresponding payment accounts to conduct payment transactions with the merchant 116. The cardholder 104 may enter payment account details on their electronic device 106 such as a mobile device to perform an online payment transaction. In another example, the cardholder 104 may utilize a payment card to perform an offline payment transaction. Generally, the term "payment transaction" refers to an agreement that is carried out between a buyer and a seller to exchange assets as a form of payment (*e.g.*, cash, currency, etc.). For example, the cardholder 104 may enter details of the payment card on an e-commerce platform to buy goods or products. In an example, the cardholder (*e.g.*, the cardholder 104) may transact at the merchant 116.

In one embodiment, the cardholder 104 may be associated with the issuer server 118. In one embodiment, the issuer server 118 is associated with a financial institution normally called an "issuer bank", "issuing bank" or simply "issuer", in which a cardholder (*e.g.*, the cardholder 104) may have the payment account, (which also issues a payment card, such as a credit card or a debit card), and provides microfinance banking services (*e.g.*, payment transaction using credit/debit cards) for processing electronic payment transactions, to the cardholder (*e.g.*, the cardholder 104).

In an embodiment, the merchant 116 is associated with the acquirer server 120. In an embodiment, each merchant (*e.g.*, the merchant 116) is associated with the acquirer server 120. In one embodiment, the acquirer server 120 is associated with a financial institution (*e.g.*, a bank) that processes financial transactions for the merchant 116. This can be an institution that facilitates the processing of payment transactions for physical stores, merchants (*e.g.*, the merchant 116), or institutions that own platforms that make either online purchases or purchases made via software applications possible (*e.g.*, shopping cart platform providers and in-app payment processing providers). The terms "acquirer", "acquiring bank", "acquiring bank" or "acquirer server" will be used interchangeably herein.

It is noted that as described earlier, conventional Artificial Intelligence (AI) or Machine Learning (ML) techniques suffer from various disadvantages when it comes to predicting a return probability associated with purchase transactions (*i.e.*, a transaction made during the purchase of a product) due to the following scenarios: assumption of stationarity, linear assumptions, overfitting, limited data and the like. In other words, conventional ML techniques often assume that the underlying data distribution is stationary, meaning that statistical properties remain constant over time. However, financial markets and consumer behaviors can exhibit non-stationary patterns, making it challenging to accurately model and predict whether a purchase transaction will be associated with a return in the future or not. In other words, it is very difficult for conventional ML models to predict a return transaction (*i.e.*, a transaction made to issue a refund for the product that was purchased during the purchase transaction). Additionally, many conventional ML algorithms, such as linear regression, assume linear relationships between input features and output (prediction of return in this case). Financial markets and consumer behavior are often nonlinear and complex, and therefore, assuming linearity can lead to inaccurate predictions.

Further, conventional ML models can easily over fit the training data, especially when dealing with financial data where noise and volatility are prevalent. Overfitting occurs when a model learns the noise in the data instead of the underlying patterns, resulting in poor generalization during model deployment on unseen data. Additionally, the data used by various conventional methods to predict whether the transactions will be a return or not is generally limited to data from a single merchant which may cause, the conventional ML models to learn biases thereby, providing inaccurate or skewed predictions during deployment.

The above-mentioned technical problem among other problems is addressed by one or more embodiments implemented by the server system 102 of the present disclosure. In one embodiment, the server system 102 is configured to perform one or more of the operations described herein.

In one embodiment, the server system 102 can be a standalone component (acting as a hub) connected to any entity that is capable of operating the server system 102 to predict whether a transaction will be associated with a return or not. In some embodiments, the server system 102 may be associated with the database 114. In other scenarios, the database 114 may be incorporated in the server system 102 or maybe an individual entity connected to the server system 102 or maybe a database stored in cloud storage. In one embodiment, the database 114 may store various AI or ML models, and other necessary machine instructions required for implementing the various functionalities of the server system 102 such as firmware data, operating system, and the like.

In an embodiment, the database 114 may be a data repository designed to efficiently store and manage information. In some embodiments, the database 114 may be integrated into the server system 102. For example, the server system 102 may include one or more hard disk drives as the database 114. In various non-limiting examples, the database 114 may include one or more hard disk drives (HDD), solid-state drives (SSD), an Advanced Technology Attachment (ATA) adapter, a Serial ATA (SATA) adapter, a Small Computer System Interface (SCSI) adapter, a redundant array of independent disks (RAID) controller, a storage area network (SAN) adapter, a network adapter, and/or any component providing the server system 102 with access to the database 114. In one implementation, the database 114 may be viewed, accessed, amended, updated, and/or deleted by an administrator (not shown) associated with the server system 102 through a database management system (DBMS) or relational database management system (RDBMS) present within the database 114. In another embodiment, the database 114 may further include an ML model for predicting whether a purchase transaction will be associated with a return or not. In another embodiment, the database 114 may further include the training dataset and transaction-related dataset for training the ML model.

In an example, the database 114 stores the historical transaction dataset which may also include transaction data of a plurality of cardholders (for instance, including the cardholder 104), and a plurality of merchants (for instance, including the merchant 116). This transaction data may include various transaction attributes related to a plurality of transactions performed between the cardholders and merchants within the payment network 110. In some instances, each transaction may be described as an interaction between a cardholder such as a cardholder 104, and a merchant such as a merchant 116. To that end, the transaction data may also be called merchant-cardholder interaction data. In various non-limiting examples, the transaction data may include, but is not limited to, transaction attributes, such as transaction amount, source of funds such as bank or credit cards, transaction channel used for loading funds such as Point of Sale (POS) terminal or Automatic Teller Machine (ATM), transaction velocity features such as count and transaction amount sent in the past 'x' number of days to a particular user, transaction location information, external data sources, merchant country, merchant Identifier (ID), cardholder ID, cardholder product, cardholder Permanent Account Number (PAN), MCC, merchant location data or merchant co-ordinates, merchant industry, merchant super industry, ticket price, and other transaction-related data. It is noted that in the present disclosure, the process of transforming the data into features can be performed using conventional or known techniques and therefore, the same is not explained herein for the sake of brevity.

In an embodiment, the server system 102 is configured to predict whether a purchase transaction will be associated with a return or not within a predefined time interval or a future time interval.

To be precise when a product returns to an online store or is canceled before or after multiple failed attempts of delivery, such transactions are given the status of RTO (Return to Origin). Typically, analyzing transaction data to predict potential returns is crucial for various businesses to optimize strategies and mitigate losses. While traditional algorithms have provided some insight, the incorporation of machine learning (ML)-based techniques and leveraging data from multiple merchants offers enhanced predictive accuracy.

In an embodiment, the server system 102 is configured to receive an authorization request associated with an ongoing payment transaction initiated by a cardholder with a merchant. In various non-limiting examples, the authorization request includes at least a plurality of ongoing payment transaction attributes. Then, the server system 102 is configured to utilize the historical payment transaction dataset stored in the database 114 and the plurality of ongoing payment transaction attributes to generate a plurality of features for the cardholder 104. In other words, the server system 102 is configured to access the input raw data. The input raw data includes, for example, cardholder profile data including demographic and behavioral data like age, gender, and purchase history which provide insights into the cardholder's preferences and buying habits. Further, the raw data includes merchant-related data such as information about the product which can influence the likelihood of a return. For example, a product with a low average review score might have a higher chance of being returned. Additionally, the raw data includes transaction details such as the context of the purchase, providing details about when the product was made, how it was paid for, and how long it took to deliver, which can also impact the decision to return. These raw input data are collected from various databases/sources such as the database 114. Further, the raw input data is merged and pre-processed before being transformed to extract the features.

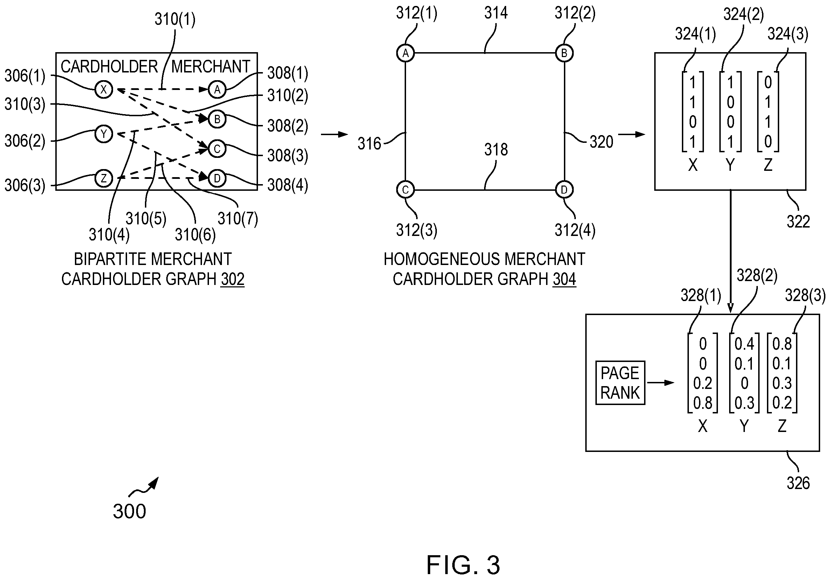

Further, the server system 102 is configured to utilize an AI or ML model stored in the database 114 to generate a first return probability score associated with the ongoing payment transaction using the plurality of features. Herein, the first return probability score indicates a likelihood of the ongoing payment transaction being associated with a return request within a predefined time interval. More specifically, a return prediction model associated with the server system 102 may be used to generate the first return probability score. In a non-limiting example, the return prediction model is a binary classification model. It is noted that the model has been explained in detail later in the present disclosure with reference to FIG. 3. Thereafter, a first return advice code for the ongoing payment transaction is determined by the server system 102 based, at least in part, on the first return probability score and a set of predefined threshold values. In one instance, the first return advice code is at least one of high risk, moderate risk, or low risk. Once, the first return advice code is generated, the server system 102 may facilitate the transmission of an authorization response message including the return advice code to an acquirer server associated with the merchant 116.

In other embodiments, the server system 102 may facilitate the generation of return probability scores for different scenarios as well. For instance, for transactions at the stage of checkout at the POS terminal of merchants or in the electronic carts on the merchant's website, various API messages may be used to communicate with the server system 102 to generate relevant return advice scores for the concerned merchant. In another instance, the server system 102 may be configured to predict relevant return advice codes for upcoming payment transactions (*i.e.*, future payment transactions).

In another example, the return prediction model is an AI or ML-based model that is configured or trained to perform a plurality of operations. In addition, the database 114 provides a storage location for data and/or metadata obtained from various operations performed by the server system 102.

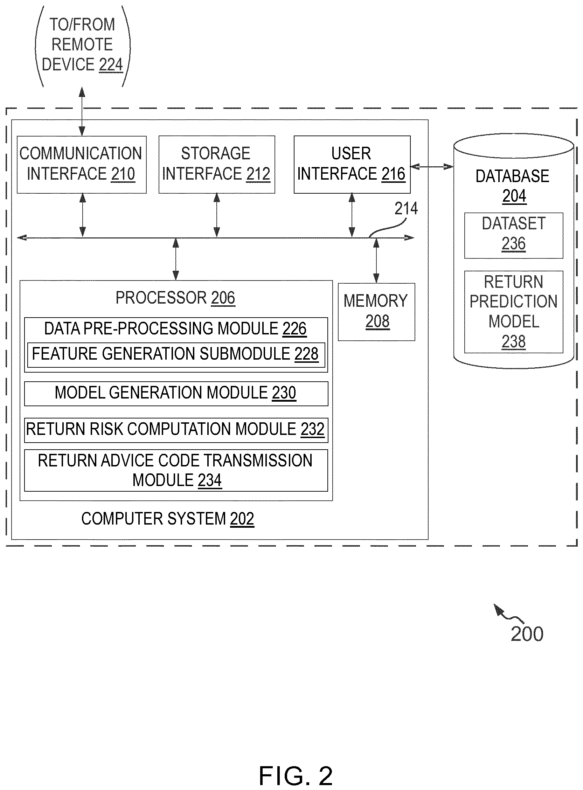

FIG. 2 illustrates a simplified block diagram of a server system 200, in accordance with an embodiment of the present disclosure. It is noted that the server system 200 is identical to the server system 102 of FIG. 1. In various implementations, the server system 200 may be implemented within a third-party server based on an application or industry for which the AI or ML model is being trained. In some embodiments, the server system 200 is embodied as a cloud-based and/or Software as a Service (SaaS) based architecture.

The server system 200 includes a computer system 202 and a database 204. It is noted that the database 204 is identical to the database 114 of FIG. 1. The computer system 202 includes at least one processor 206 for executing instructions, a memory 208, a communication interface 210, a user interface 216, and a storage interface 212 that communicate with each other via a bus 214.

In some embodiments, the database 204 is integrated into the computer system 202. For example, the computer system 202 may include one or more hard disk drives as the database 204. The user interface 216 is any component capable of providing an administrator (not shown) of the server system 200, the ability to interact with the server system 200. This user interface 216 may be a GUI or Human Machine Interface (HMI) that can be used by the administrator (not shown) to configure the various operational parameters of the server system 200. The storage interface 212 is any component capable of providing the processor 206 with access to the database 204. The storage interface 212 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the processor 206 with access to the database 204. In one non-limiting example, the database 204 is configured to store a dataset 236, a return prediction model 238, and the like. It is noted that the return prediction model 238 is identical to the return prediction model mentioned in the description of FIG. 1.

The processor 206 includes suitable logic, circuitry, and/or interfaces to execute operations for training an AI or ML model and further predict the transaction will be a return, and the like. In other words, the processor 206 includes suitable logic, circuitry, and/or interfaces to execute operations for training the return prediction model 238 along with predicting if a transaction is associated with a potential return. Examples of the processor 206 include but are not limited to, an Application-Specific Integrated Circuit (ASIC) processor, a Reduced Instruction Set Computing (RISC) processor, a Graphical Processing Unit (GPU), a Complex Instruction Set Computing (CISC) processor, a Field-Programmable Gate Array (FPGA), and the like.

The memory 208 includes suitable logic, circuitry, and/or interfaces to store a set of computer-readable instructions for performing various operations described herein. Examples of the memory 208 include a Random-Access Memory (RAM), a Read-Only Memory (ROM), a removable storage drive, a Hard Disk Drive (HDD), and the like. It will be apparent to a person skilled in the art that the scope of the disclosure is not limited to realizing the memory 208 in the server system 200, as described herein. In another embodiment, the memory 208 may be realized in the form of a database server or a cloud storage working in conjunction with the server system 200, without departing from the scope of the present disclosure.

The processor 206 is operatively coupled to the communication interface 210, such that the processor 206 is capable of communicating with a remote device (*i.e.,* to/from a remote device 224) such as a third-party server (not shown), or communicating with any entity connected to the network 108 (as shown in FIG. 1). Herein, the third-party server may be any computing server that operates uses the server system 200 to train any AI or ML model.

It is noted that the server system 200 as illustrated and hereinafter described is merely illustrative of an apparatus that could benefit from embodiments of the present disclosure and, therefore, should not be taken to limit the scope of the present disclosure. It is noted that the server system 200 may include fewer or more components than those depicted in FIG. 2.

In one implementation, the processor 206 includes a data pre-processing module 226, a feature generation submodule 228, a model generation module 230, a return risk computation module 232, and a return advice code transmission module 234. It should be noted that components, described herein, such as the data pre-processing module 226, the feature generation submodule 228, the model generation module 230, the return risk computation module 232, and the return advice code transmission module 234 can be configured in a variety of ways, including electronic circuitries, digital arithmetic, and logic blocks, and memory systems in combination with software, firmware, and embedded technologies. Additionally, it is to be noted that the feature generation submodule 228 is a part of the data pre-processing module 226.

In an embodiment, the data pre-processing module 226 includes suitable logic and/or interfaces for accessing a dataset 236 from the database 204. In various non-limiting examples, the dataset 236 may include a training dataset and a transaction-related dataset for training the ML model such as the return prediction model 238. The training dataset may include information related to a plurality of entities and a plurality of transactions. In various non-limiting examples pertaining to the financial domain, within the payment eco-system, the plurality of entities may include a plurality of cardholders, a plurality of merchants, a plurality of issuer servers, and a plurality of acquirer servers. Further, the information related to these entities may include information related to a plurality of historical payment transactions performed by the plurality of cardholders with the plurality of merchants. Further, the information related to various entities may include the classification of transactions within the training dataset. For instance, the plurality of transactions executed at a merchant categorized in fashion domain, within the training dataset may be classified and labeled as 'return' and 'non-return' transactions. It is noted that although the aforementioned non-limiting example is specific to the fashion industry, however, the various operations of the present disclosure are not limited to the same. To that end, the dataset 236 can be configured to include different information specific to any field of operation. Therefore, it is understood that the various embodiments of the present disclosure apply to a variety of different fields of operation and the same is covered within the scope of the present disclosure.

Returning to the previous example, the dataset 236 may include information related to a plurality of historical payment transactions performed within a predetermined interval of time (*e.g.*, 6 months, 12 months, 24 months, *etc.*). In some other non-limiting examples, the dataset 236 includes information related to at least merchant name identifier, unique merchant identifier, timestamp information (*i.e.*, transaction date/time), geo-location related data (*i.e.*, latitude and longitude of the cardholder/merchant), Merchant Category Code (MCC), merchant industry, merchant super industry, information related to payment instruments involved in the set of historical payment transactions, cardholder identifier, Permanent Account Number (PAN), merchant name, country code, transaction identifier, transaction amount, and the like.

In one example, the dataset 236 may define a relationship between each of the plurality of entities. In a non-limiting example, a relationship between a cardholder account and a merchant account may be defined by a transaction performed between them. For instance, when a cardholder purchases an item from a merchant, a relationship is said to be established.

In another embodiment, the dataset 236 may include information related to past payment transactions such as transaction date, transaction time, geo-location of a transaction, transaction amount, transaction marker (*e.g.*, fraudulent or non-fraudulent), and the like. In yet another embodiment, the dataset 236 may include information related to a plurality of acquirer servers such as the date of merchant registration with the acquirer server, amount of payment transactions performed at the acquirer server in a day, number of payment transactions performed at the acquirer server in a day, maximum transaction amount, minimum transaction amount, number of fraudulent merchants or non-fraudulent merchants registered with the acquirer server, and the like. It is noted that the various transaction-related information described herein may collectively be referred to as a plurality of transaction attributes such that the plurality of transaction attributes provide information related to the plurality of transactions performed between the plurality of cardholders and a plurality of merchants in a payment network.

In an embodiment, the data pre-processing module 226 includes a submodule such as the feature generation submodule 228. The feature generation submodule 228 is configured to generate various features from the data in the dataset 236. For instance, the features generated may include a plurality of transaction amounts, a plurality of transaction types, a merchant category code, a time stamp associated with the transaction, a payment method, a plurality of previous transactions by the cardholder, a location data associated with the transaction. In an embodiment, the data pre-processing module 226 is configured to generate new attributes that are systematically derived from pre-existing features (this is termed computational feature engineering), exemplified by attributes such as the average transaction value over a predefined period or frequency of transactions within specific intervals. For instance, the new attributes may include rolling metrics which are the metrics calculated over a rolling window of transactions, temporal differences which are the time difference between transactions, aggregated metrics which are aggregating transaction data over specific categories or periods, ratios which can provide normalized measures by capturing relationships between different features, frequency metrics that capture how often certain transaction behaviors occur, encoding schemes which transform categorical data into a numerical format suitable for machine learning models and interaction features derived from the interaction between two or more existing features.

In another embodiment, the data pre-processing module 226 is configured to perform the normalization step, min-max scaling step, and missing value imputation step. The normalization step in machine learning refers to the process of transforming the features of a dataset into a standardized range or distribution, typically to improve the performance and convergence of machine learning algorithms. The goal of normalization is to make the data more consistent and comparable, preventing certain features from dominating or having undue influence on the model's training process. Normalizing transforms the features to have a mean of zero and a standard deviation of one. In a non-limiting example, the following equation 1 may be used for the normalizing step given below:

$$z = \frac{x - \mu}{\sigma} \dots \text{Eqn. 1}$$

Here, x is the original feature value, $\mu$ is the mean of the feature, $\sigma$ is the standard deviation of the feature and z is the normalized value.

In an embodiment, the min-max scaling step is a technique that scales the features to a specified range, often [0, 1]. In a non-limiting example, the following equation 1 may be used for the min-max scaling step given below:

$$X_{\text{norm}} = \frac{X - X_{\min}}{X_{\max} - X_{\min}} \dots \text{Eqn. 2}$$

Here, X is the original feature value, $X_{\max}$ and $X_{\min}$ are the maximum and the minimum value of the feature respectively, $X_{\text{norm}}$ is the scaled value of the feature.

In an embodiment, the missing value imputation is a crucial step in preprocessing data for machine learning models, as many machine learning algorithms require complete datasets to function properly. Missing values can occur due to various reasons such as data collection errors, incomplete data, or data not being applicable for certain instances. The imputation substitutes missing values with plausible estimates. Some of the techniques for missing value imputation in machine learning include mean imputation which replaces the missing values with the mean of observed values. In another embodiment, median imputation may be used which replaces the missing value with the median of the observed values and is useful for skewed data. In yet another embodiment, mode imputation may be used especially for categorical data and replaces missing values with the mode of the respective column.

In an embodiment, the data pre-processing module 226 includes a submodule such as the feature generation submodule 228. The feature generation submodule 228 is configured to generate various features from the data in the dataset 236.

In an embodiment, one such feature generated and further fed into the return prediction model 238 is the likelihood of a cardholder being a serial returnee. Few merchants have lenient return policies and cardholders can misuse such lenient return policies, leading to large return rates from cardholders. A serial returnee is a cardholder associated with a card with high return rates associated with the purchase transactions. Presently, there exists no method to map the return transaction to the corresponding purchase transaction, and partial returns (when a subset of items from the purchase transaction are returned) pose a challenge in modeling. To overcome these limitations, the present invention includes a method to predict the likelihood of a cardholder being a serial returnee.

In an embodiment, predicting the likelihood of a cardholder being a serial returnee is based on a few assumptions. One such assumption is that the behavior of serial returnees is similar across merchants having similar return policy behavior and other characteristics. The second assumption is that the server system 200 has a broader view of transactions at different merchants (or industries). The existence of signals from other merchants can be leveraged to predict the return behavior of cards at a particular merchant. For instance, if a cardholder makes high returns at some merchants, he is likely to make high returns at another merchant with similar characteristics (industry, return policy) to those merchants.

In an embodiment, historical transaction data related to the payment cards of the cardholders is extracted from the database such as the database 204. The historical transaction data includes cardholder-merchant interactions. The cardholder-merchant interactions are such that merchants belonging to the same industry are selected. In an example, the cardholder-merchant interactions are selected based on the ratio of R and P within a given period. The selection is based on comparing the ratio of R and P with a threshold value. Further, if the ratio of R and P is greater than the threshold value it is considered that the cardholder-merchant interaction has a high ratio of R and P. Additionally, a bipartite graph for the cardholder-merchant interaction may be generated using the high ratio of R and P.

In an embodiment, the merchant-merchant interaction graph is constructed based on the common payment cards with a high ratio of R and P. It is noted that the merchant-merchant interaction graph is a homogeneous merchant graph that is generated from the bipartite graph of cardholder-merchant interaction. The homogeneous merchant graph provides information related to the common payment cards used for transactions at the merchants. Further, a preference vector of the payment cards is generated for previous transactions done at each merchant and having a high ratio of R and P. Furthermore, using the bipartite graph and the preference vector of the cards a page rank is generated providing information about the likelihood of a card being a serial returnee. It is noted that the likelihood of a card being a serial returnee at every merchant is calculated for every card based on it. It is noted that a detailed explanation and architecture about the prediction of the likelihood of a card being a serial returnee will be explained in FIG. 3.

In an embodiment, the model generation module 230 includes suitable logic and/or interfaces for creating, training, and fine-tuning the return prediction model 238 that can make intelligent decisions or predictions based on the training data. It is noted that the process of model generation includes the first step of learning or training the model on relevant data. This data can come from various sources, including databases such as the database 204, training datasets accumulated from various sources/entities such as dataset 236, previous user interactions, etc. Further, raw data from the various sources are preprocessed which involves tasks like handling missing values, scaling features, encoding categorical variables, and splitting the data into training and testing sets. Thereafter, the process of model generation involves feature engineering which is the process of selecting, transforming, or creating new features (input variables) from the available training dataset. Further, the machine learning model is selected and trained wherein, the model learns to identify patterns and relationships within the data. It is to be noted that, model generation is often an iterative process. As more training data in the training dataset in the dataset 236 is collected and additional insights are gained, models can be retrained and improved to maintain or enhance their predictive accuracy. Additionally, the model generation module 230 is configured to compute the loss associated with the return prediction model 238, a set of features is generated based on the set of labeled transactions that were return or non-return. The return prediction model 238 is then configured to mask a few features from the set of features. Thereafter, the return prediction model 238 is configured to predict/recreate/reconstruct the masked features based on the remaining features. Finally, a comparison is performed between the reconstructed features and the actual features that were masked to determine a reconstruction loss.

In an embodiment, the return risk computation module 232 includes suitable logic and/or interfaces for computing the return probability score associated with a payment transaction. In particular, for computing the likelihood of a payment transaction to be associated with a return or not the return risk computation module 232 is configured to compute a return probability score. It is noted that the return probability score is computed at the pre-payment level, ongoing payment transaction level, or post-payment level.

For example, the return probability score may be computed before a transaction is initiated by the cardholder such as the cardholder 104, and is based on checkout attributes of the shopping cart products at a merchant website or application. In another example, the return probability score may be computed with the ongoing transaction being initiated by the cardholder such as the cardholder 104, and is based on the transaction attributes included in the authorization request received by the server system 200. In yet another example, the return probability score may be computed after the transaction has been done by the cardholder such as the cardholder 104 and is based on a plurality of transaction attributes related to a plurality of historical payment transactions received from the database such as the database 204.

Further, it is noted that based on the return probability score generated at the pre-payment level, ongoing payment transaction level, or at the post-payment level, a return advice code is generated and transmitted to the acquirer server associated with the merchant such as the merchant 116. The return advice code is associated with the risk level of the transaction to be associated with the return. It is to be noted that the risk level may be very high risk, moderate risk, or low risk. Based on the risk level associated with the likelihood or probability of return appropriate action may be taken by the merchant end. For example, if the risk level associated with the likelihood of return is very high, the merchant may add additional delivery charges for the transaction or introduce a dynamic return policy, etc. In an example embodiment, the return probability score may lie between 0 to 999. In an embodiment, the return prediction model 238 is trained using the historical transaction dataset from the dataset 236. Hence, by comparing the predicted label of the transaction with the actual label, the return prediction model 238 may be trained and a binary classification model is generated.

In another embodiment, the return advice code transmission module 234 includes suitable logic and/or interfaces for transmitting the generated return advice code generated by the return risk computation module 232 to the acquirer server associated with the merchant such as the merchant 116. The return advice code is associated with the risk level of the transaction to be associated with a return. It is to be noted that the risk level may be very high risk, moderate risk, or low risk. Based on the risk level associated with the likelihood or probability of return appropriate action may be taken or configured by the merchant end. For example, if the risk level associated with the likelihood of return is very high, the merchant may add additional delivery charges for the transaction or introduce a dynamic return policy, etc.

FIG. 3 illustrates a block diagram 300 representation of an exemplary process for generating a page rank, in accordance with an example of the present disclosure.

In an embodiment, to predict the likelihood of a cardholder such as a cardholder 104 being a serial returnee a few assumptions are considered. One such assumption is that the behavior of serial returnees is similar across merchants having similar return policy behavior and other characteristics. The second assumption is that a payment processor associated with various acquirers and issuers in the payment network 110 has a broader view of payment transactions across a plurality of merchants. The existence of data accumulated from a plurality of merchants and the plurality of cardholders can be leveraged to predict the return behavior of a cardholder at a particular merchant. For instance, if a cardholder such as cardholder 104 makes high returns at some merchants, the cardholder 104 is likely to make high returns at another merchant with similar characteristics (such as industry, return policy, and the like) to those merchants.

In an embodiment, the first step in estimating the likelihood of a cardholder being a serial returnee is to compute a total return amount (R) for the cardholder, and a total purchase amount (P) for the cardholder. These computations are based, at least in part, on the plurality of transaction attributes related to the plurality of historical payment transactions performed between a plurality of cardholders and a plurality of merchants. In other words, the R and P amount ratio within a given period at a particular merchant for every payment card associated with the cardholder such as the cardholder 104. For example, the ratio of R and P may be calculated for every quarter at a particular merchant and a particular card. In other words, a set of ratios of R and P is computed for the plurality of cardholders such that each ratio of R and P of the set of ratios of R and P corresponds to each cardholder of the plurality of cardholders.

In an embodiment, historical transaction data related to the plurality of historical payment transactions performed between a plurality of cardholders and a plurality of merchants is extracted from the database such as the database 204. The historical transaction data includes the plurality of transaction attributes. In an instance, the historical transaction data represents cardholder-merchant interactions. The cardholder-merchant interactions may be represented such that merchants belonging to the same industry are selected. In an example, the cardholder-merchant interactions are selected based on the ratio of R and P within a given period. The selection is based on comparing the ratio of R and P with a threshold value. Further, if the ratio of R and P is greater than the threshold value it is considered that the cardholder-merchant interaction has a high ratio of R and P. In other words, a set of high ratios of R and P is extracted from the set of ratios of R and P based, at least in part, on a value associated with each ratio of R and P being at least equal to a threshold value. Thereafter, a bipartite graph for the plurality of historical payment transactions based, at least in part, on the plurality of transaction attributes and the set of high ratios of R and P. The bipartite graph includes a first plurality of nodes and a first plurality of edges. Herein, the first plurality of nodes corresponds to the plurality of cardholders and the plurality of merchants. Further, the first plurality of edges corresponds to a set of high ratios of R and P. Further, a homogeneous merchant graph is generated from the bipartite graph for the merchant-merchant interaction. The homogeneous merchant graph includes a second plurality of nodes. Herein, the second plurality of nodes corresponds to the plurality of merchants.

As described earlier, the feature generation submodule 228 of the server system 200 is configured to reduce a merchant-cardholder bipartite graph or bipartite merchant-cardholder graph (*see*, 302), (hereinafter referred to interchangeably as 'cardholder-merchant bipartite graph 302') to generate a homogeneous merchant cardholder graph (*see*, 304) also known interchangeably as homogeneous merchant cardholder graph 304 (hereinafter referred to interchangeably as 'homogeneous merchant graph 304'). It is understood that the homogeneous merchant cardholder graph 304 or the homogeneous merchant graph 304 are non-limiting examples of homogeneous entity graphs thus, may be referred to interchangeably as homogeneous entity graph 304 as well. Upon referring to FIG. 3, it is understood that the block diagram 300 includes a cardholder-merchant bipartite graph 302 and a homogeneous merchant graph 304. Further, the cardholder-merchant bipartite graph 302 includes a first plurality of nodes (*see*, 306(1), 306(2), 306(3), 308(1), 308(2), 308(3), and 308(4)) connected to each other via a plurality of edges (*see*, 310(1), 310(2), 310(3), 310(4), 310(5), 310(6) and 310(7)). In this example, the nodes 306(1)-306(3) represent a plurality of cardholders (*see*, X, Y, Z) and the nodes 308(1)-308(4) represent a plurality of merchants (*see*, A, B, C, D). It is noted that the plurality of edges 310(1)-310(7) indicates a relationship between the plurality of cardholders X-Z and the plurality of merchants A-D. Herein, the relationship can be defined as the ratio of R and P between the respective merchant node and the respective cardholder node. In other words, the plurality of edges 310(1)-310(7) corresponds to the high ratio of R and P (as described in FIG. 3).

Further, the homogeneous entity graph 304 includes a second plurality of nodes (*see*, 312(1), 312(2), 312(3), and 312(4)) connected to each other via a second plurality of edges (*see*, 314, 316, 318, 320). In this example, the second plurality of nodes 312(1)-312(4) represent the plurality of merchants (*see*, A, B, C, and D) and the edges 314, 316, 318, and 320 indicate a relationship between the plurality of merchants A-D. Herein, this can be defined as the number of cardholders shared in common between the plurality of merchants A-D. Since, in this exemplary homogeneous entity graph 304 one cardholder is common between merchant A and merchant B, edge 314 can be defined by a length or a weight of 1. Similarly, in this exemplary homogeneous entity graph 304 since one cardholder is common between merchant C and merchant D, the edge 318 can be defined by a length or a weight of 1.

In particular, for generating a bipartite graph, such as a cardholder-merchant bipartite graph 302, cardholder-merchant interaction data (*i.e.*, the plurality of transaction attributes present in the historical transaction dataset from the dataset 236) for a specific timeline T is analyzed. Then, this data is used to generate a bipartite graph where different nodes represent either the plurality of merchants (such as A-D), or the plurality of cardholders (such as X-Z) interacting with each other via transactions within the timeline T. The cardholder-merchant bipartite graph 302 is used to generate the homogeneous merchant graph 304. For example, the homogeneous merchant graph 304 is an undirected weighted graph between merchant nodes. In this graph, edge weight represents the number of common cardholders (or payment cards) with a high ratio of R and P in the previous quarter. The homogeneous merchant graph 304 captures the similarity between the merchants based on the number of common cards between them. In one instance, this similar behavior may be due to the similar lenient return policy between different merchants. For instance, if two merchants share a common set of cards, and these cards have previously exhibited a high rate of returns at one of the merchants. Then, there is a considerable likelihood that a similar pattern of card behavior will occur at the other merchants connected to the former merchant within the cardholder-merchant bipartite graph. The homogeneous merchant graph 304 is configured to generate an adjacency matrix (called merchant correspondence matrix) based on the set of high ratios of R and P and the homogeneous merchant graph. In particular, the merchant correspondence matrix has various rows and columns where each row and column corresponds to a merchant node, and values in each cell represent the edge weight (*i.e.*, the number of common high ratios of R and P payment cards). An example of a merchant correspondence matrix is given shown using Table 1 below:

**Table 1:** An example of a merchant correspondence matrix

|   | A | B | C | D |
|---|---|---|---|---|
| A | 0 | 0.3 | 0.15 | 0.1 |
| B | 0.6 | 0 | 0.7 | 0 |
| C | 0.3 | 0.7 | 0 | 0.3 |
| D | 0.1 | 0 | 0.15 | 0.6 |

Here, in Table 1, A-D represents the plurality of merchants. Now, in an embodiment, a preference vector 322 is computed for each payment card that has been transacted in the previous quarter. The server system 200 generates the preference vector 322 for each cardholder based on the set of high ratios of R and P. Herein, the preference vector 322 corresponding to each cardholder indicates the past return behavior of each cardholder at the plurality of merchants. It is noted, that a preference vector 322 is a binary vector representing if the payment card has shown a high ratio of R and P at a merchant in the previous quarter. The preference vector 322 gives us an idea about the past return behavior of the payment card at other merchants. As would be apparent, this history of the payment card can be used to make future predictions at other similar merchants (based upon the cardholder-merchant bipartite graph connections). In an embodiment, the preference vector 322 is constructed for every payment card at every merchant considering the high ratio of R and P value. Herein, the preference vector 322 includes historical merchant visits of a payment card (*see*, 324(1), 324(2), and 324(3)) with high ratios of R and P.

In an embodiment, a preference vector 322 is computed for each card that has transacted in the previous quarter. An example of the preference vector for a cardholder (pertaining to a particular card) is shown in Table 2 below:

Table 2: Exemplary preference vector

| A | 0.7 |
|---|---|
| B | 0.1 |
| C | 0 |
| D | 0.2 |

Here, in Table 2, A-D represents the plurality of merchants and the corresponding values are the ratio of R and P for the particular merchant and card interactions.

In an embodiment, the final step to predict the likelihood if a cardholder is a serial returnee or not is to generate a page rank 326. Herein, a PageRank algorithm or technique is used to assess the significance of nodes within the homogeneous graph 304 based on their connections. In a page rank 326, a node represents a merchant, and edges quantify the number of cardholders with high ratio of **R** and **P** which co-visit between connected merchants (see, 328(1), 328(2), and 328(3)). This algorithm can be applied to determine the PageRank 326 of merchants. Subsequently, the user's intent, such as a preference for high return behavior, can serve as the search query, and the algorithm will return matching merchants in accordance with their PageRank 326. For example, if two merchants share a common set of cards, and these cards have previously exhibited a high rate of returns at one of the merchants. Then, there is a significant likelihood that a similar card behavior pattern will manifest at the other merchant connected within the homogeneous merchant graph 304. This similarity may arise due to their comparable lenient return policies.

In a non-limiting example, a pseudo-code for generating a current vector for every payment card providing the predicted probability of a high ratio of R and P at every merchant in the next specific period of time (for example, in the next month) is given in the steps below:

Step 1: Set the current vector as the preference vector

Step 2: Set merchant correspondence matrix = row_normalization (merchant correspondence matrix)

    3: Step for i in range (i being the number of iterations):

                Step 3A: set current vector = constant x transpose of merchant correspondence matrix x current vector

    Step 3B: weight = 1 - a sum of the current vector

    Step 3: Set current vector = current vector + (weight * preference vector)

Here, the current vector is the predicted probability of high R/P for every payment card corresponding to the cardholder at every merchant such as the merchant 116. It is noted that the sub-steps of step 3, *i.e.*, steps 3A-3C are executed iteratively for i number of times.

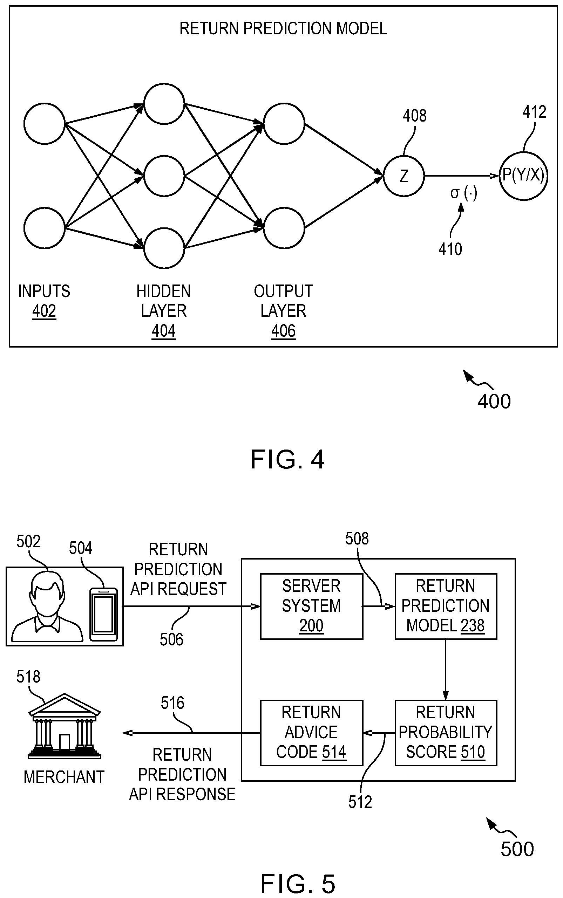

FIG. 4 illustrates an exemplary representation 400 of an architecture of a return prediction model, in accordance with an embodiment of the present disclosure.

In an embodiment, the architecture of the return prediction model 400 includes an input layer 402, a plurality of hidden layers 404, and an output layer 406. As described earlier, the return prediction model 400 may be implemented as a binary classification model. In this implementation, the return prediction model 400 is trained on a set of data points from the training dataset. In an instance, the training dataset may be extracted as a portion of the historical transaction dataset. The input layer 402 accepts the processed feature values generated using the feature generation submodule 228. It is to be noted that if there are N features (N being a non-zero natural number), the input layer consists of N number of neurons each corresponding to the feature values.

Herein, the return prediction model 400 includes a plurality of hidden layers 404. To be more precise, in machine learning models, a hidden layer refers to one or more layers of artificial neurons (or nodes) that are located between the input layer 402 and output layer 406 of the machine learning model. These hidden layers are called "hidden" because they are not directly observable from the outside. Further, the hidden layers do not interact with the external environment and their purpose is to process and transform the input data into a form that is more suitable for the output layer to produce accurate predictions. In an embodiment, each neuron in the hidden layer is the weighted sum of the previous layer's output passed through an activation function. It is to be noted that this allows the network to learn complex, non-linear relationships. In a non-limiting example, the output of the hidden layer is given by Eqn. 3 as given below:

$$h_j = \sigma\left(\sum_{i=1}^{n} w_{ij} x_i + b_j\right) \dots \text{Eqn. } 3$$

wherein, $h_j$ is the output of the $j$th neuron in the hidden layer, $x_i$ is the output of the $i$th neuron of the input layer, $w_{ij}$ is the weight connecting the $i$th neuron of the input layer to the $j$th neuron in the hidden layer, $\sigma$ is the sigmoid activation function and $b_j$ is the bias for the $j$th neuron.

In an embodiment, the output layer 406 generally consists of a single neuron. The output layer 406 of the return prediction model 400 produces the model's predictions based on the transformed representations from the plurality of hidden layers. It is noted that the output from the hidden layer 408 is transformed into a probability score 412 using the sigmoid activation function 410, which ranges between [0, 1]. In a non-limiting example, the output of the output layer is given by Eqn. 4 as given below:

$$o = \sigma\left(\sum_{k=1}^{m} w_k h_k + b\right) \dots \text{Eqn. } 4$$

Wherein, o is the probability score 412 computed using the sigmoid activation function 410, $h_k$ is the output of the $k$th neuron from the hidden layer, $w_k$ is the weight connecting the $k$th neuron of the last hidden layer to the output neuron, $b$ is the bias for the output neuron, $\sigma$ is the sigmoid activation function. In an embodiment, the output from the output layer 406 is the probability score which is then compared with a threshold to classify the transaction as a return or non-return. In a non-limiting example, the transaction is classified using Eqn. 5 as given below:

$$\begin{cases} 1 & \text{if } o \geq t \\ 0 & \text{otherwise} \end{cases} \text{... Eqn. 5}$$

Where t is the threshold value. In a non-limiting example, the threshold value t may be set to 0.5. However, it is noted that the same should not be construed as limiting and any threshold value may be set as the internal policies of the acquirers. The same can be adjusted based on the application's needs.

In an embodiment, the return prediction model 400 is trained using the training data from the dataset 236. In forward propagation, initiating from the input, data propagates sequentially through the network, yielding a predictive output, *i.e.*, the return probability score. The input such as the features generated using the raw data is propagated through the neural network, layer by layer. It is noted that data at each layer is transformed using weight, biases, and activation functions, in order to get the final prediction at the output layer 406. In a non-limiting example, the weighted sum at neuron j is calculated using Eqn. 6 as given below:

$$z_j = \left( \sum_{i=1}^{n} w_{ij} x_i + b_j \right) \text{... Eqn. 6}$$

wherein, $h_j$ is the output of the $j^{th}$ neuron in the hidden layer, $x_i$ is the output of the $i^{th}$ neuron of the previous layer, $w_{ij}$ is the weight connecting the $i^{th}$ neuron of the previous layer to the $j^{th}$ neuron in the output layer, $\sigma$ is the sigmoid activation function and $b_j$ is the bias for the $j^{th}$ neuron.

In an embodiment, the return prediction model 400 is trained based on performing a set of operations iteratively till the performance of the return prediction model converges to predefined criteria.

In a non-limiting implementation, the set of operations includes initializing the ML model such as the return prediction model 400 based, at least in part, on one or more model parameters. In a non-liming example, the model parameters include weights, biases, layers, and the like for the model. Further, the set of operations includes a plurality of training features based on the training dataset. In an example, the training dataset includes a plurality of training transaction attributes related to a plurality of training transactions.

It is understood that the training features are similar to the features described earlier but they are named so since they are only used during the training process. Therefore, they are not explained in detail for the sake of brevity. Then, the set of operations includes determining a training return probability score for each training transaction from the plurality of training transactions based on the plurality of training features. Then each training transaction is classified into a return transaction or a non-return transaction based, at least in part, on the training return probability score for each training transaction and a predefined threshold value. The predefined threshold value may be defined by the administrator (not shown) of the server system 200. Further, the set of operations includes utilizing a loss function to compute a classification loss for each training transaction based on the training dataset. As may be understood, the training dataset includes a validation dataset that includes ground truth labels for the training transactions. These ground truth labels are used to calculate the loss values. In an embodiment, the deviation between the model's prediction and the actual label is quantified, typically using binary cross-entropy. In a non-limiting example, the binary cross-entropy loss for binary classification is given by Eqn. 7 as given below:

$$L(y, p) = -(y \log(p) + (1 - y) \log(1 - p)) \text{... Eqn. 7}$$

Where *y* is the actual label (0 or 1), *p* is the predicted probability of the positive class (output from the neural network).

Furthermore, the set of operations includes optimizing the one or more model parameters based, at least in part, on back-propagating the classification loss. For example, the optimization algorithms may include Gradient Descent, RMSprop, Adam, and the like. It is noted that in order to improve the model's performance, the model parameters (such as weight, and biases) need to be adjusted such that the loss is minimized (i.e., the predefined criteria). In order to find the direction and magnitude of these adjustments, the gradient with respect to each parameter is computed and optimization algorithms utilize these gradients to update the weights and biases.

FIG. 5 illustrates a process flow diagram 500 for predicting returns in a pre-payment scenario using the return prediction model, in accordance with an embodiment of the present disclosure. The process flow diagram 500 depicted in the flow diagram may be executed by, for example, the server system 200. The sequence of operations of the method in the process flow diagram 500 may not be necessarily executed in the same order as they are presented. Further, one or more operations may be grouped and performed in the form of a single step, or one operation may have several sub-steps that may be performed in parallel or in a sequential manner. Operations of process flow diagram 500, and combinations of operations in the process flow diagram 500 may be implemented by, for example, hardware, firmware, a processor, circuitry, and/or a different device associated with the execution of software that includes one or more computer program instructions.

As may be understood, in a pre-payment scenario, the cardholder 502 uses his electronic device such as the device 504 to access a merchant via a website or application. In an example, the merchant may be a fashion category merchant and the cardholder wants to buy a plurality of fashion items from the merchant. In an embodiment, the cardholder 502 adds a few products to his cart and proceeds to the checkout. Before the final checkout, the merchant may generate and transmit a return prediction API request message 506. In a non-limiting example, the return prediction API request message 506 includes at least a plurality of checkout attributes. In various non-limiting examples, the plurality of checkout attributes may include the product details, product price, and the time stamp of adding the products to the cart, etc., among other relevant attributes. Further, the return prediction API request message 506 is received by the server system 200 and is forwarded to a return prediction model 238 at step 508. The return prediction model 238 is configured to receive the checkout attributes and generate a return probability score 510 related to the cardholder 502. Additionally, the return probability score 510 is used to generate a return advice code 514 at step 512 and further send the return advice code 514 to the acquirer server associated with the merchant 518 in a return prediction API response 516. In this particular instance, the return advice code 514 is called a second return advice code.

In the financial domain, the "return advice code" in transactions typically refers to a specific code or identifier used to indicate the risk of return associated with the transaction or payment. When a financial transaction needs to be reversed or returned, it's important to provide a clear reason for the return so that all parties involved understand why the reversal is occurring. Furthermore, based on the generated return advice code 514 the server system 200 can associate the payment transaction with different categories of risk levels. For example, based on the return advice code 514, the server system 200 can categorize the payment transaction to be very high risk, moderate risk, or low risk, the risk being the payment transaction to be associated with a return. Based on the risk level appropriate action may be taken by the merchant end such as the addition of extra delivery charges or extending the delivery date for the product.

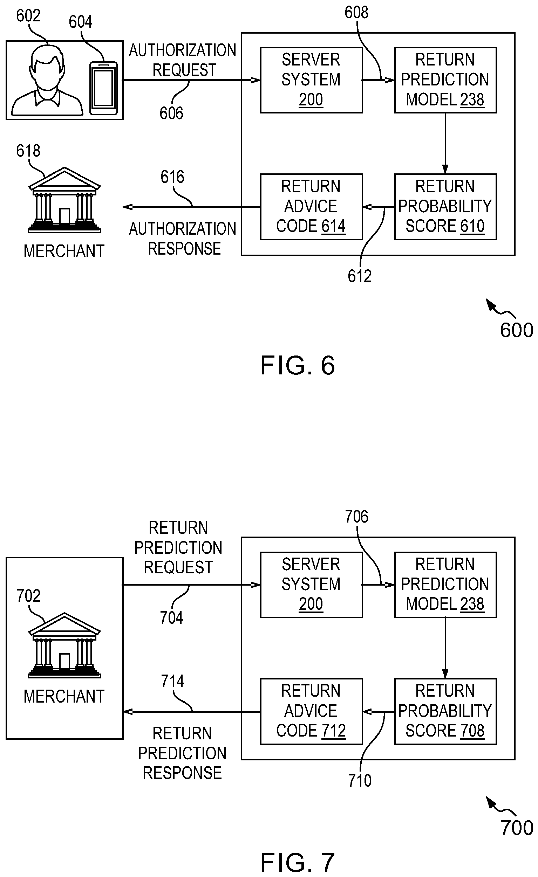

FIG. 6 illustrates a process flow diagram 600 for predicting returns in an ongoing payment scenario using the return prediction model, in accordance with an embodiment of the present disclosure. The process flow diagram 600 depicted in the flow diagram may be executed by, for example, the server system 200. The sequence of operations of the method in the process flow diagram 600 may not be necessarily executed in the same order as they are presented. Further, one or more operations may be grouped and performed in the form of a single step, or one operation may have several sub-steps that may be performed in parallel or in a sequential manner. Operations of the process flow diagram 600, and combinations of operations in the process flow diagram 600 may be implemented by, for example, hardware, firmware, a processor, circuitry, and/or a different device associated with the execution of software that includes one or more computer program instructions.

As may be understood, in a pre-payment scenario, the cardholder 602 uses his device such as the device 604 to access a merchant via a website or application. In an example, the merchant may be an e-commerce category merchant such as Merchant A and the cardholder wants to buy a plurality of products from Merchant A. In an embodiment, the cardholder 602 adds a few products to his cart and proceeds to the checkout. After the checkout, the merchant may generate and transmit an authorization request 606 which includes at least a plurality of ongoing payment transaction attributes. In various non-limiting examples, the plurality of ongoing payment transaction attributes may include the product details, product price, and the time stamp of adding the products to the cart, etc., among other relevant attributes. Further, the authorization request 606 message is received by the server system 200 which is forwarded to a return prediction model 238 at step 608. The return prediction model 238 is configured to receive the ongoing payment transaction attributes and generate a return probability score 610 related to the cardholder 602. Additionally, the return probability score 610 is used to generate a return advice code 614 at step 612 and further send the return advice code to the acquirer server associated with the merchant 618 in an authorization response 616. Furthermore, based on the generated return advice code 614 the server system 200 can associate the payment transaction with different categories of risk levels. For example, based on the return advice code 614 server system 200 can categorize the payment transaction to be very high risk, moderate risk, or low risk, the risk being the payment transaction to be associated with a return. Based on the risk level appropriate action may be taken by the merchant end such as the addition of extra delivery charges or extending the delivery date for the product. In this particular instance, the return advice code 614 is called a first return advice code.

FIG. 7 illustrates a process flow diagram 700 for predicting returns in a post-payment scenario using the return prediction model 238, in accordance with an embodiment of the present disclosure. The process flow diagram 700 depicted in the flow diagram may be executed by, for example, the server system 200. The sequence of operations of the process flow diagram 700 may not be necessarily executed in the same order as they are presented. Further, one or more operations may be grouped and performed in the form of a single step, or one operation may have several sub-steps that may be performed in parallel or in a sequential manner. Operations of the process flow diagram 700, and combinations of operations in the process flow may be implemented by, for example, hardware, firmware, a processor, circuitry, and/or a different device associated with the execution of software that includes one or more computer program instructions. In a post-payment scenario, the data related to the historical payment transactions done by the cardholders at a plurality of merchants is extracted from the database such as the database 204 associated with the server system.

After the data is extracted, the merchant may generate and transmit a return prediction request 704 message is generated and includes a plurality of historical payment transactions. In an embodiment, the return prediction request 704 message is the upcoming return prediction request. In various non-limiting examples, the plurality of historical payment transactions includes the cardholder's previous transaction behaviors, such as average transaction value, frequency of returns, time since last purchase, etc., among other relevant attributes. Further, the return prediction request 704 is received by the server system 200 and forwarded to a return prediction model 238 at step 706. The return prediction model 238 is configured to receive the historical payment transaction dataset and generate a return probability score 708. Additionally, the return probability score 708 is used to generate a return advice code 712 at the step 710 and further send the return advice code 712 to the acquirer server associated with the merchant 702 in a return prediction response 714. Furthermore, based on the generated return advice code 712 the server system 200 can associate the payment transaction with different categories of risk levels. In this particular instance, the return advice code 712 is called a third return advice code. For example, based on the return advice code 712 the server system 200 can categorize the payment transaction to be very high risk, moderate risk, or low risk, the risk being the payment transaction to be associated with a return. Based on the risk level appropriate action may be taken by the merchant. For example, in case of a very high risk of cardholders being associated with a return request, the future order will be cancelled by the merchant.

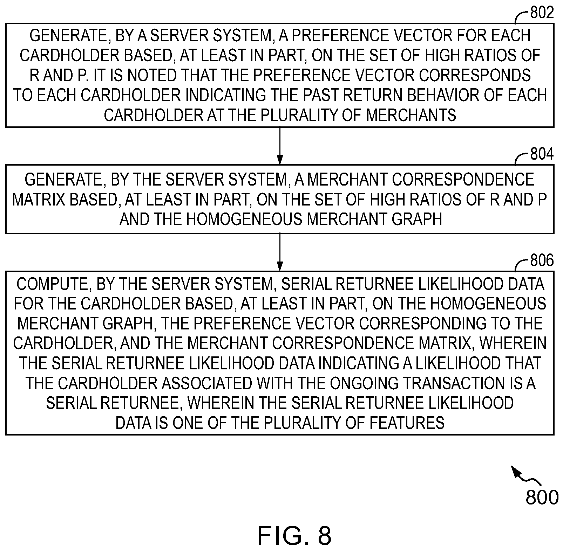

FIG. 8 illustrates a process flow diagram depicting a method for predicting whether a cardholder is a serial returnee, in accordance with an embodiment of the present disclosure. The method 800 depicted in the flow diagram may be executed by, for example, the server system 200. The sequence of operations of the method 800 may not be necessarily executed in the same order as they are presented. Further, one or more operations may be grouped and performed in the form of a single step, or one operation may have several sub-steps that may be performed in parallel or in a sequential manner. Operations of the method 800, and combinations of operations in the method 800 may be implemented by, for example, hardware, firmware, a processor, circuitry, and/or a different device associated with the execution of software that includes one or more computer program instructions. The plurality of operations is depicted in the process flow of the method 800. The process flow starts at operation 802.

At 802, the method 800 includes generating, by a server system such as the server system 200, a preference vector for each cardholder such as the cardholder 104 based, at least in part, on the set of high ratios of R and P. It is noted that the preference vector corresponds to each cardholder indicating the past return behavior of each cardholder at the plurality of merchants.

At 804, the method 800 includes generating, by the server system such as the server system 200, a merchant correspondence matrix based, at least in part, on the set of high ratios of R and P and the homogeneous merchant graph.

At 806, the method 800 includes computing, by the server system such as the server system 200, serial returnee likelihood data for the cardholder based, at least in part, on the homogeneous merchant graph, the preference vector corresponding to the cardholder, and the merchant correspondence matrix. It is noted that the serial returnee likelihood data indicates a likelihood that the cardholder such as the cardholder 104 being associated with the ongoing transaction is a serial returnee. Additionally, the serial returnee likelihood data is one of the plurality of features.

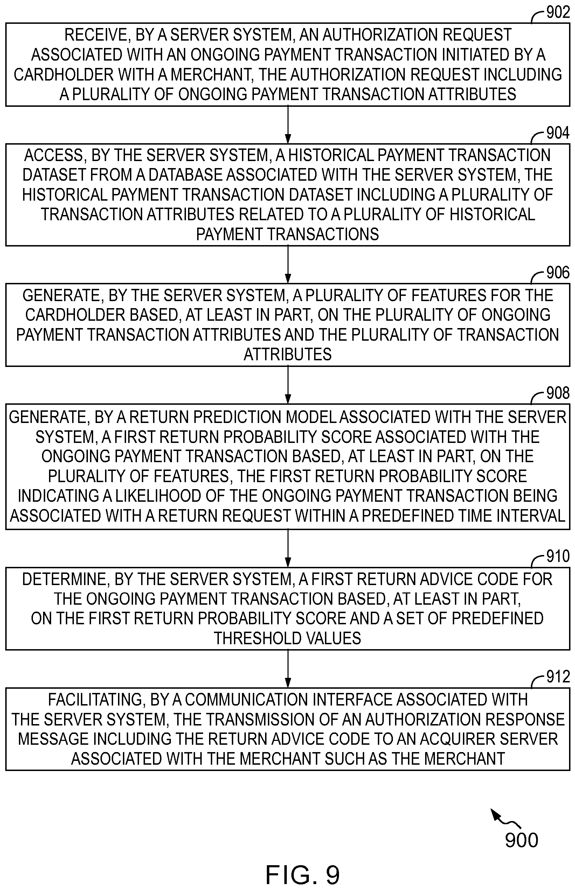

FIG. 9 illustrates a process flow diagram depicting a method for predicting potential returns in an ongoing payment scenario using the return prediction model, in accordance with an embodiment of the present disclosure. The method 900 depicted in the flow diagram may be executed by, for example, the server system 200. The sequence of operations of the method 900 may not be necessarily executed in the same order as they are presented. Further, one or more operations may be grouped and performed in the form of a single step, or one operation may have several sub-steps that may be performed in parallel or in a sequential manner. Operations of the method 900, and combinations of operations in the method 900 may be implemented by, for example, hardware, firmware, a processor, circuitry, and/or a different device associated with the execution of software that includes one or more computer program instructions. The plurality of operations is depicted in the process flow of the method 900. The process flow starts at operation 902.

At 902, the method 900 includes receiving, by a server system such as the server system 200, an authorization request associated with an ongoing payment transaction initiated by a cardholder such as the cardholder 104 with a merchant such the merchant 116. The authorization request includes a plurality of ongoing payment transaction attributes.

At 904, the method 900 includes accessing, by the server system 200, a historical payment transaction dataset from a database 204 associated with the server system, the historical payment transaction dataset including a plurality of transaction attributes related to a plurality of historical payment transactions.

At 906, the method 900 includes generating, by the server system 200, a plurality of features for the cardholder such as the cardholder 104 based, at least in part, on the plurality of ongoing payment transaction attributes and the plurality of transaction attributes.

At 908, the method 900 includes generating, by a return prediction model 238 associated with the server system 200, a first return probability score associated with the ongoing payment transaction based, at least in part, on the plurality of features. It is noted that the first return probability score indicates a likelihood of the ongoing payment transaction being associated with a return request within a predefined time interval.

At 910, the method 900 includes determining, by the server system 200, a first return advice code for the ongoing payment transaction based, at least in part, on the first return probability score and a set of predefined threshold values

At 912, the method 900 includes facilitating, by a communication interface associated with the server system 200, the transmission of an authorization response message including the return advice code to an acquirer server associated with the merchant such as the merchant 116.

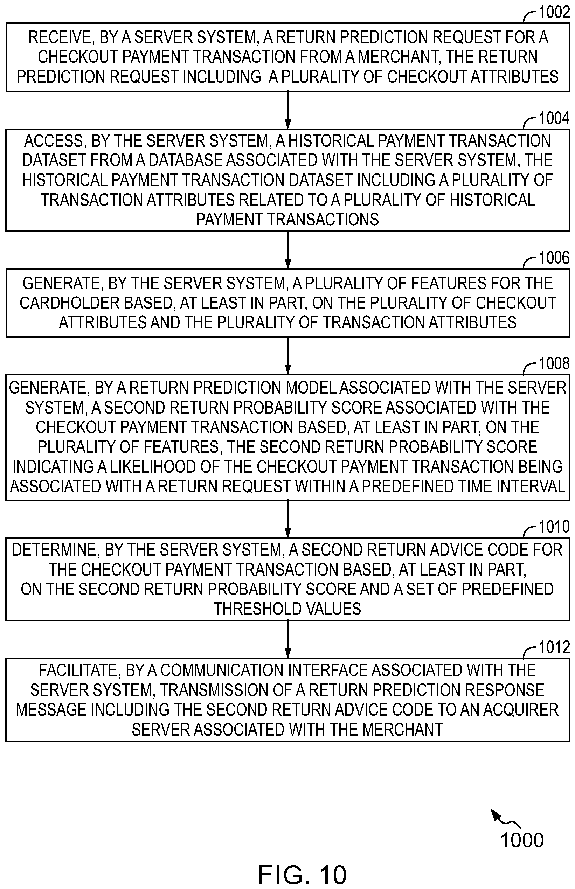

FIG. 10 illustrates a process flow diagram depicting a method 1000 for predicting potential returns in a pre-payment scenario using the return prediction model, in accordance with an embodiment of the present disclosure. The method 1000 depicted in the flow diagram may be executed by, for example, the server system 200. The sequence of operations of the method 1000 may not be necessarily executed in the same order as they are presented. Further, one or more operations may be grouped and performed in the form of a single step, or one operation may have several sub-steps that may be performed in parallel or in a sequential manner. Operations of the method 1000, and combinations of operations in the method 1000 may be implemented by, for example, hardware, firmware, a processor, circuitry, and/or a different device associated with the execution of software that includes one or more computer program instructions. The plurality of operations is depicted in the process flow of the method 1000. The process flow starts at operation 1002.

At 1002, the method 1000 includes receiving, by the server system 200, a return prediction request for a checkout payment transaction from a merchant such as a merchant 116. The return prediction request includes a plurality of checkout attributes.

At 1004, the method 1000 includes accessing, by the server system 200, a historical payment transaction dataset from a database such as database 204 associated with the server system 200, the historical payment transaction dataset including a plurality of transaction attributes related to a plurality of historical payment transactions.

At 1006, the method 1000 includes generating, by the server system 200, a plurality of features for the cardholder such as the cardholder 104 based, at least in part, on the plurality of checkout attributes and the plurality of transaction attributes.

At 1008, the method 1000 includes generating, by the server system 200 via a return prediction model 238, a second return probability score associated with the checkout payment transaction based, at least in part, on the plurality of features, the second return probability score indicating a likelihood of the checkout payment transaction being associated with a return request within a predefined time interval.

At 1010, the method 1000 includes determining, by the server system 200, a second return advice code for the checkout payment transaction based, at least in part, on the second return probability score and a set of predefined threshold values.

At 1012, the method 1000 includes facilitating, by a communication interface 210 associated with the server system 200, transmission of a return prediction response message including the second return advice code to an acquirer server 120 associated with the merchant 116.

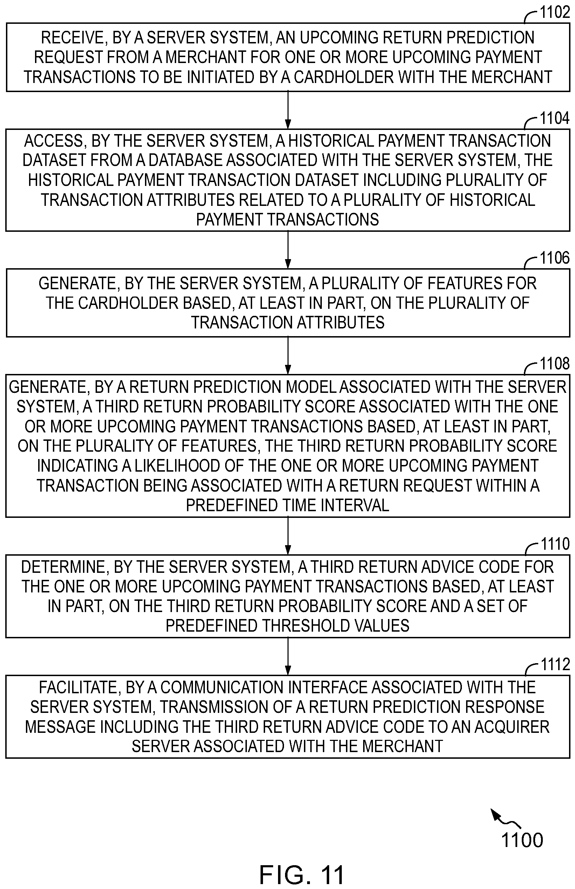

FIG. 11 illustrates a process flow diagram depicting a method for predicting potential returns in a post-payment scenario using the return prediction model, in accordance with an embodiment of the present disclosure. The method 1100 depicted in the flow diagram may be executed by, for example, the server system 200. The sequence of operations of the method 1100 may not be necessarily executed in the same order as they are presented. Further, one or more operations may be grouped and performed in the form of a single step, or one operation may have several sub-steps that may be performed in parallel or in a sequential manner. Operations of the method 1100, and combinations of operations in the method 1100 may be implemented by, for example, hardware, firmware, a processor, circuitry, and/or a different device associated with the execution of software that includes one or more computer program instructions. The plurality of operations is depicted in the process flow of the method 1100. The process flow starts at operation 1102.

At 1102, the method 1100 includes receiving, by a server system 200, an upcoming return prediction request from a merchant such as merchant 116 for one or more upcoming payment transactions to be initiated by a cardholder such as cardholder 104 with the merchant 116.

At 1104, the method 1100 includes accessing, by the server system 200, a historical payment transaction dataset from a database 204 associated with the server system 200. The historical payment transaction dataset includes a plurality of transaction attributes related to a plurality of historical payment transactions.

At 1106, the method 1100 includes generating, by the server system 200, a plurality of features for a cardholder based, at least in part, on the plurality of transaction attributes.

At 1108, the method 1100 includes generating, by the server system 200 via a return prediction model 238, a third return probability score associated with the one or more upcoming payment transactions based, at least in part, on the plurality of features, the third return probability score indicating a likelihood of the one or more upcoming payment transaction being associated with a return request within a predefined time interval.

At 1110, the method 1100 includes determining, by the server system 200, a third return advice code for the one or more upcoming payment transactions based, at least in part, on the third return probability score and a set of predefined threshold values.

At 1112, the method 1100 includes facilitating, by a communication interface 210 associated with the server system 200, the transmission of a return prediction response message including the third return advice code to an acquirer server associated with the merchant.

The disclosed method with reference to FIG. 5-11, or one or more operations of the server system 200 may be implemented using software including computer-executable instructions stored on one or more computer-readable media (*e.g.*, non-transitory computer-readable media, such as one or more optical media discs, volatile memory components (*e.g.*, DRAM or SRAM), or nonvolatile memory or storage components (*e.g.*, hard drives or solid-state nonvolatile memory components, such as Flash memory components) and executed on a computer (*e.g.*, any suitable computer, such as a laptop computer, netbook, Web book, tablet computing device, smartphone, or other mobile computing devices). Such software may be executed, for example, on a single local computer or in a network environment (*e.g.*, via the Internet, a wide-area network, a local-area network, a remote web-based server, a client-server network (such as a cloud computing network), or other such networks) using one or more network computers. Additionally, any of the intermediate or final data created and used during the implementation of the disclosed methods or systems may also be stored on one or more computer-readable media (*e.g.*, non-transitory computer-readable media) and are considered to be within the scope of the disclosed technology. Furthermore, any of the software-based embodiments may be uploaded, downloaded, or remotely accessed through a suitable communication means. Such suitable communication means include, for example, the Internet, the World Wide Web (WWW), an intranet, software applications, cable (including fiber optic cable), magnetic communications, electromagnetic communications (including Radio Frequency (RF), microwave, and infrared communications), electronic communications, or other such communication means.

Although the invention has been described with reference to specific exemplary embodiments, it is noted that various modifications and changes may be made to these embodiments without departing from the broad scope of the invention. For example, the various operations, blocks, *etc.*, described herein may be enabled and operated using hardware circuitry (for example, Complementary Metal Oxide Semiconductor (CMOS) based logic circuitry), firmware, software, and/or any combination of hardware, firmware, and/or software (for example, embodied in a machine-readable medium). For example, the apparatuses and methods may be embodied using transistors, logic gates, and electrical circuits (for example, Application Specific Integrated Circuit (ASIC) circuitry and/or Digital Signal Processor (DSP) circuitry).

Particularly, the server system 200 and its various components may be enabled using software and/or using transistors, logic gates, and electrical circuits (for example, integrated circuit circuitry such as ASIC circuitry). Various embodiments of the invention may include one or more computer programs stored or otherwise embodied on a computer-readable medium, wherein the computer programs are configured to cause the processor or the computer to perform one or more operations. A computer-readable medium storing, embodying, or encoded with a computer program, or similar language, may be embodied as a tangible data storage device storing one or more software programs that are configured to cause the processor or computer to perform one or more operations. Such operations may be, for example, any of the steps or operations described herein. In some embodiments, the computer programs may be stored and provided to a computer using any type of non-transitory computer-readable media. Non-transitory computer-readable media includes any type of tangible storage media. Examples of non-transitory computer-readable media include magnetic storage media (such as floppy disks, magnetic tapes, hard disk drives, *etc.*), optical magnetic storage media (*e.g.* magneto-optical disks), Compact Disc Read-Only Memory (CD-ROM), Compact Disc Recordable (CD-R), compact disc rewritable (CD-R/W), Digital Versatile Disc (DVD), BLU-RAY® Disc (BD), and semiconductor memories (such as mask ROM, programmable ROM (PROM), (erasable PROM), flash memory, Random Access Memory (RAM), *etc.*). Additionally, a tangible data storage device may be embodied as one or more volatile memory devices, one or more non-volatile memory devices, and/or a combination of one or more volatile memory devices and non-volatile memory devices. In some embodiments, the computer programs may be provided to a computer using any type of transitory computer-readable media. Examples of transitory computer-readable media include electric signals, optical signals, and electromagnetic waves. Transitory computer-readable media can provide the program to a computer via a wired communication line (*e.g.*, electric wires, and optical fibers) or a wireless communication line.

Various embodiments of the invention, as discussed above, may be practiced with steps and/or operations in a different order, and/or with hardware elements in configurations, which are different than those which, are disclosed. Therefore, although the invention has been described based on these exemplary embodiments, it is noted that certain modifications, variations, and alternative constructions may be apparent and well within the scope of the invention.

Although various exemplary embodiments of the invention are described herein in a language specific to structural features and/or methodological acts, the subject matter defined in the appended claims is not necessarily limited to the specific features or acts described above. Rather, the specific features and acts described above are disclosed as exemplary forms of implementing the claims.

There now follows a series of clauses, not claims, setting out aspects of the invention:

1. A computer-implemented method, comprising:

receiving, by a server system, an authorization request associated with an ongoing payment transaction initiated by a cardholder with a merchant, the authorization request comprising a plurality of ongoing payment transaction attributes;

accessing, by the server system, a historical payment transaction dataset from a database associated with the server system, the historical payment transaction dataset comprising a plurality of transaction attributes related to a plurality of historical payment transactions;

generating, by the server system, a plurality of features for the cardholder based, at least in part, on the plurality of ongoing payment transaction attributes and the plurality of transaction attributes;

generating, by a return prediction model associated with the server system, a first return probability score associated with the ongoing payment transaction based, at least in part, on the plurality of features, the first return probability score indicating a likelihood of the ongoing payment transaction being associated with a return request within a predefined time interval;

determining, by the server system, a first return advice code for the ongoing payment transaction based, at least in part, on the first return probability score and a set of predefined threshold values; and

facilitating, by a communication interface associated with the server system, transmission of an authorization response message comprising the return advice code to an acquirer server associated with the merchant.

2. The computer-implemented method as in clause 1, comprising:
training, by the server system, the return prediction model based, at least in part, on performing a set of operations for a plurality of iterations until the performance of the return prediction model converges to a predefined criteria, the set of operations comprising:

initializing the return prediction model based, at least in part, on one or more model parameters;

generating a plurality of training features based, at least in part, on a training dataset, the training dataset comprising a plurality of training transaction attributes related to a plurality of training transactions;

determining a training return probability score for each training transaction from the plurality of training transactions based, at least in part, on the plurality of training features;

classifying each training transaction into one of a return transaction and a non-return transaction based, at least in part, on the training return probability score for each training transaction and a predefined threshold value;

computing a classification loss for each training transaction based, at least in part, on a loss function and the training dataset; and

optimizing the one or more model parameters based, at least in part, on back-propagating the classification loss.

3. The computer-implemented method as in clause 1, wherein the first return advice code is at least one of high risk, moderate risk, and low risk.

4. The computer-implemented method as in clause 1, further comprising:

determining, by the server system, a total return amount (R) for the cardholder, and a total purchase amount (P) for the cardholder based, at least in part, on the plurality of transaction attributes related to the plurality of historical payment transactions performed between a plurality of cardholders and a plurality of merchants;

computing, by the server system, a set of ratios of R and P for the plurality of cardholders, each ratio of R and P of the set of ratios of R and P corresponding to each cardholder of the plurality of cardholders; and

extracting, by the server system, a set of high ratios of R and P from the set of ratios of R and P based, at least in part, on a value associated with each ratio of R and P being at least equal to a threshold value.

5. The computer-implemented method as in clause 4, further comprising:

generating, by the server system, a bipartite graph for the plurality of historical payment transactions based, at least in part, on the plurality of transaction attributes and the set of high ratios of R and P, the bipartite graph comprising a first plurality of nodes and a first plurality of edges, the first plurality of nodes corresponds to the plurality of cardholders and the plurality of merchants, the first plurality of edges corresponding to the set of high ratios of R and P; and

generating, by the server system, a homogeneous merchant graph based, at least in part, on the bipartite graph, the homogeneous merchant graph comprising a second plurality of nodes, the second plurality of nodes corresponds to the plurality of merchants.

6. The computer-implemented method as in clause 5, further comprising:

generating, by the server system, a preference vector for each cardholder based, at least in part, on the set of high ratios of R and P, the preference vector corresponding to each cardholder indicating the past return behavior of each cardholder at the plurality of merchants; and

generating, by the server system, a merchant correspondence matrix based, at least in part, on the set of high ratios of R and P and the homogeneous merchant graph.

7. The computer-implemented method as in clause 6, further comprising:
computing, by the server system, serial returnee likelihood data for the cardholder based, at least in part, on the homogeneous merchant graph, the preference vector corresponding to the cardholder, and the merchant correspondence matrix, wherein the serial returnee likelihood data indicates a likelihood that the cardholder associated with the ongoing transaction is a serial returnee.

8. The computer-implemented method as in clause 7, wherein the plurality of features comprises the serial returnee likelihood data for the cardholder.

9. The computer-implemented method as in clause 1, wherein the plurality of features comprises a plurality of transaction amounts, a plurality of transaction types, a merchant category code, a time stamp associated with the transaction, a payment method, a plurality of previous transactions by the cardholder, a location data associated with the transaction.

10. A computer-implemented method, comprising:

receiving, by a server system, a return prediction request for a checkout payment transaction from a merchant, the return prediction request comprising a plurality of checkout attributes;

accessing, by the server system, a historical payment transaction dataset from a database associated with the server system, the historical payment transaction dataset comprising a plurality of transaction attributes related to a plurality of historical payment transactions;

generating, by the server system, a plurality of features for the cardholder based, at least in part, on the plurality of checkout attributes and the plurality of transaction attributes;

generating, by a return prediction model associated with the server system, a second return probability score associated with the checkout payment transaction based, at least in part, on the plurality of features, the second return probability score indicating a likelihood of the checkout payment transaction being associated with a return request within a predefined time interval;

determining, by the server system, a second return advice code for the checkout payment transaction based, at least in part, on the second return probability score and a set of predefined threshold values; and

facilitating, by a communication interface associated with the server system, transmission of a return prediction response message comprising the second return advice code to an acquirer server associated with the merchant.

11. The computer-implemented method as in clause 10, wherein the return prediction request is an Application Programming Interface (API) request message and the return prediction response message is an API response message.

12. The computer-implemented method as in clause 10, wherein the plurality of checkout attributes comprises serial returnee likelihood data, a cart value, a total amount of the transaction, a time stamp associated with the transaction, location data associated with the transaction and the like.

13. A computer-implemented method, comprising:

receiving, by a server system, an upcoming return prediction request from a merchant for one or more upcoming payment transactions to be initiated by a cardholder with the merchant;

accessing, by the server system, a historical payment transaction dataset from a database associated with the server system, the historical payment transaction dataset comprising a plurality of transaction attributes related to a plurality of historical payment transactions;

generating, by the server system, a plurality of features for the cardholder based, at least in part, on the plurality of transaction attributes;

generating, by a return prediction model associated with the server system, a third return probability score associated with the one or more upcoming payment transactions based, at least in part, on the plurality of features, the third return probability score indicating a likelihood of the one or more upcoming payment transaction being associated with a return request within a predefined time interval;

determining, by the server system, a third return advice code for the one or more upcoming payment transactions based, at least in part, on the third return probability score and a set of predefined threshold values; and

facilitating, by a communication interface associated with the server system, transmission of a return prediction response message comprising the third return advice code to an acquirer server associated with the merchant.

14. A server system, comprising:

a memory configured to store instructions;

a communication interface; and
a processor in communication with the memory and the communication interface, the processor configured to execute the instructions stored in the memory and thereby cause the server system to perform at least in part to:

receive an authorization request associated with an ongoing payment transaction initiated by a cardholder with a merchant, the authorization request comprising a plurality of ongoing payment transaction attributes;

access a historical payment transaction dataset from a database associated with the server system, the historical payment transaction dataset comprising a plurality of transaction attributes related to a plurality of historical payment transactions;

generate a plurality of features for the cardholder based, at least in part, on the plurality of ongoing payment transaction attributes and the plurality of transaction attributes;

generate by a return prediction model, a first return probability score associated with the ongoing payment transaction based, at least in part, on the plurality of features, the first return probability score indicating a likelihood of the ongoing payment transaction being associated with a return request within a predefined time interval;

determine a first return advice code for the ongoing payment transaction based, at least in part, on the first return probability score and a set of predefined threshold values; and

facilitate by a communication interface transmission of an authorization response message comprising the return advice code to an acquirer server associated with the merchant.

15. The server system as in clause 14, wherein training the return prediction model based, at least in part, on performing a set of operations for a plurality of iterations until the performance of the return prediction model converges to a predefined criteria, the server system is further caused, at least in part, to:

initializing the return prediction model based, at least in part, on one or more model parameters;

generating a plurality of training features based, at least in part, on a training dataset, the training dataset comprising a plurality of training transaction attributes related to a plurality of training transactions;

determining a training return probability score for each training transaction from the plurality of training transactions based, at least in part, on the plurality of training features;

classifying each training transaction into one of a return transaction and a non-return transaction based, at least in part, on the training return probability score for each training transaction and a predefined threshold value;

computing a classification loss for each training transaction based, at least in part, on a loss function and the training dataset; and

optimizing the one or more model parameters based, at least in part, on back-propagating the classification loss.

16. The server system as in clause 14, wherein the first return advice code is at least one of high risk, moderate risk, and low risk.

17. The server system as in clause 14, wherein the server system is further caused, at least in part, to:

determine a total return amount (R) for the cardholder, and a total purchase amount (P) for the cardholder based, at least in part, on the plurality of transaction attributes related to the plurality of historical payment transactions performed between a plurality of cardholders and a plurality of merchants;

compute a set of ratios of R and P for the plurality of cardholders, each ratio of R and P of the set of ratios of R and P corresponding to each cardholder of the plurality of cardholders; and

extract a set of high ratios of R and P from the set of ratios of R and P based, at least in part, on a value associated with each ratio of R and P being at least equal to a threshold value.

18. The server system as in clause 14, wherein the server system is further caused, at least in part, to:

generate a bipartite graph for the plurality of historical payment transactions based, at least in part, on the plurality of transaction attributes and the set of high ratios of R and P, the bipartite graph comprising a first plurality of nodes and a first plurality of edges, the first plurality of nodes corresponds to the plurality of cardholders and the plurality of merchants, the first plurality of edges corresponding to set of high ratio of R and P; and

generate a homogeneous merchant graph based, at least in part, on the bipartite graph, the homogeneous merchant graph comprising a second plurality of nodes, the second plurality of nodes corresponds to the plurality of merchants.

19. The server system as in clause 15, wherein the server system is further caused, at least in part, to:

generate a preference vector for each cardholder based, at least in part, on the set of high ratios of R and P, the preference vector corresponding to each cardholder indicating the past return behavior of each cardholder at the plurality of merchants;

generate a merchant correspondence matrix based, at least in part, on the set of high ratios of R and P and the homogeneous merchant graph; and

compute serial returnee likelihood data for the cardholder based, at least in part, on the homogeneous merchant graph, the preference vector corresponding to the cardholder, and the merchant correspondence matrix, wherein the serial returnee likelihood data indicates a likelihood that the cardholder associated with the ongoing transaction is a serial returnee, wherein the serial returnee likelihood data is one of the plurality of features.

**Claims**

1. A computer-implemented method, comprising:

   receiving, by a server system, an authorization request associated with an ongoing payment transaction initiated by a cardholder with a merchant, the authorization request comprising a plurality of ongoing payment transaction attributes;
   accessing, by the server system, a historical payment transaction dataset from a database associated with the server system, the historical payment transaction dataset comprising a plurality of transaction attributes related to a plurality of historical payment transactions;
   generating, by the server system, a plurality of features for the cardholder based, at least in part, on the plurality of ongoing payment transaction attributes and the plurality of transaction attributes;
   generating, by a return prediction model associated with the server system, a first return probability score associated with the ongoing payment transaction based, at least in part, on the plurality of features, the first return probability score indicating a likelihood of the ongoing payment transaction being associated with a return request within a predefined time interval;
   determining, by the server system, a first return advice code for the ongoing payment transaction based, at least in part, on the first return probability score and a set of predefined threshold values; and
   facilitating, by a communication interface associated with the server system, transmission of an authorization response message comprising the return advice code to an acquirer server associated with the merchant.

2. The computer-implemented method as claimed in claim 1, comprising:
   training, by the server system, the return prediction model based, at least in part, on performing a set of operations for a plurality of iterations until the performance of the return prediction model converges to a predefined criteria, the set of operations comprising:

   initializing the return prediction model based, at least in part, on one or more model parameters;
   generating a plurality of training features based, at least in part, on a training dataset, the training dataset comprising a plurality of training transaction attributes related to a plurality of training transactions;
   determining a training return probability score for each training transaction from the plurality of training transactions based, at least in part, on the plurality of training features;
   classifying each training transaction into one of a return transaction and a non-return transaction based, at least in part, on the training return probability score for each training transaction and a predefined threshold value;
   computing a classification loss for each training transaction based, at least in part, on a loss function and the training dataset; and
   optimizing the one or more model parameters based, at least in part, on back-propagating the classification loss.

3. The computer-implemented method as claimed in claim 1 or claim 2, further comprising:

   determining, by the server system, a total return amount (R) for the cardholder, and a total purchase amount (P) for the cardholder based, at least in part, on the plurality of transaction attributes related to the plurality of historical payment transactions performed between a plurality of cardholders and a plurality of merchants;
   computing, by the server system, a set of ratios of R and P for the plurality of cardholders, each ratio of R and P of the set of ratios of R and P corresponding to each cardholder of the plurality of cardholders; and
   extracting, by the server system, a set of high ratios of R and P from the set of ratios of R and P based, at least in part, on a value associated with each ratio of R and P being at least equal to a threshold value.

4. The computer-implemented method as claimed in claim 3, further comprising:

   generating, by the server system, a bipartite graph for the plurality of historical payment transactions based, at least in part, on the plurality of transaction attributes and the set of high ratios of R and P, the bipartite graph comprising a first plurality of nodes and a first plurality of edges, the first plurality of nodes corresponds to the plurality of cardholders and the plurality of merchants, the first plurality of edges corresponding to the set of high ratios of R and P; and
   generating, by the server system, a homogeneous merchant graph based, at least in part, on the bipartite graph, the homogeneous merchant graph comprising a second plurality of nodes, the second plurality of nodes corresponds to the plurality of merchants.

5. The computer-implemented method as claimed in claim 4, further comprising:

generating, by the server system, a preference vector for each cardholder based, at least in part, on the set of high ratios of R and P, the preference vector corresponding to each cardholder indicating the past return behavior of each cardholder at the plurality of merchants; and
generating, by the server system, a merchant correspondence matrix based, at least in part, on the set of high ratios of R and P and the homogeneous merchant graph.

6. The computer-implemented method as claimed in claim 5, further comprising:
computing, by the server system, serial returnee likelihood data for the cardholder based, at least in part, on the homogeneous merchant graph, the preference vector corresponding to the cardholder, and the merchant correspondence matrix, wherein the serial returnee likelihood data indicates a likelihood that the cardholder associated with the ongoing transaction is a serial returnee; and optionally
wherein the plurality of features comprises the serial returnee likelihood data for the cardholder.

7. The computer-implemented method as claimed in any preceding claim, wherein the plurality of features comprises a plurality of transaction amounts, a plurality of transaction types, a merchant category code, a time stamp associated with the transaction, a payment method, a plurality of previous transactions by the cardholder, a location data associated with the transaction.

8. A computer-implemented method, comprising:

receiving, by a server system, a return prediction request for a checkout payment transaction from a merchant, the return prediction request comprising a plurality of checkout attributes;
accessing, by the server system, a historical payment transaction dataset from a database associated with the server system, the historical payment transaction dataset comprising a plurality of transaction attributes related to a plurality of historical payment transactions;
generating, by the server system, a plurality of features for the cardholder based, at least in part, on the plurality of checkout attributes and the plurality of transaction attributes;
generating, by a return prediction model associated with the server system, a second return probability score associated with the checkout payment transaction based, at least in part, on the plurality of features, the second return probability score indicating a likelihood of the checkout payment transaction being associated with a return request within a predefined time interval;
determining, by the server system, a second return advice code for the checkout payment transaction based, at least in part, on the second return probability score and a set of predefined threshold values; and
facilitating, by a communication interface associated with the server system, transmission of a return prediction response message comprising the second return advice code to an acquirer server associated with the merchant.

9. The computer-implemented method as claimed in claim 8, wherein the return prediction request is an Application Programming Interface (API) request message and the return prediction response message is an API response message.

10. The computer-implemented method as claimed in claim 8 or 9, wherein the plurality of checkout attributes comprises serial returnee likelihood data, a cart value, a total amount of the transaction, a time stamp associated with the transaction, location data associated with the transaction and the like.

11. A computer-implemented method, comprising:

receiving, by a server system, an upcoming return prediction request from a merchant for one or more upcoming payment transactions to be initiated by a cardholder with the merchant;
accessing, by the server system, a historical payment transaction dataset from a database associated with the server system, the historical payment transaction dataset comprising a plurality of transaction attributes related to a plurality of historical payment transactions;
generating, by the server system, a plurality of features for the cardholder based, at least in part, on the plurality of transaction attributes;

generating, by a return prediction model associated with the server system, a third return probability score associated with the one or more upcoming payment transactions based, at least in part, on the plurality of features, the third return probability score indicating a likelihood of the one or more upcoming payment transaction being associated with a return request within a predefined time interval;

determining, by the server system, a third return advice code for the one or more upcoming payment transactions based, at least in part, on the third return probability score and a set of predefined threshold values; and

facilitating, by a communication interface associated with the server system, transmission of a return prediction response message comprising the third return advice code to an acquirer server associated with the merchant.

12. A server system, comprising:

a memory configured to store instructions;

a communication interface; and

a processor in communication with the memory and the communication interface, the processor configured to execute the instructions stored in the memory and thereby cause the server system to perform at least in part to:

receive an authorization request associated with an ongoing payment transaction initiated by a cardholder with a merchant, the authorization request comprising a plurality of ongoing payment transaction attributes;

access a historical payment transaction dataset from a database associated with the server system, the historical payment transaction dataset comprising a plurality of transaction attributes related to a plurality of historical payment transactions;

generate a plurality of features for the cardholder based, at least in part, on the plurality of ongoing payment transaction attributes and the plurality of transaction attributes;

generate by a return prediction model, a first return probability score associated with the ongoing payment transaction based, at least in part, on the plurality of features, the first return probability score indicating a likelihood of the ongoing payment transaction being associated with a return request within a predefined time interval;

determine a first return advice code for the ongoing payment transaction based, at least in part, on the first return probability score and a set of predefined threshold values; and

facilitate by a communication interface transmission of an authorization response message comprising the return advice code to an acquirer server associated with the merchant.

13. The server system as claimed in claim 12, wherein training the return prediction model based, at least in part, on performing a set of operations for a plurality of iterations until the performance of the return prediction model converges to a predefined criteria, the server system is further caused, at least in part, to:

initializing the return prediction model based, at least in part, on one or more model parameters;

generating a plurality of training features based, at least in part, on a training dataset, the training dataset comprising a plurality of training transaction attributes related to a plurality of training transactions;

determining a training return probability score for each training transaction from the plurality of training transactions based, at least in part, on the plurality of training features;

classifying each training transaction into one of a return transaction and a non-return transaction based, at least in part, on the training return probability score for each training transaction and a predefined threshold value;

computing a classification loss for each training transaction based, at least in part, on a loss function and the training dataset; and

optimizing the one or more model parameters based, at least in part, on back-propagating the classification loss.

14. The server system as claimed in claim 12 or 13, or the computer implemented method of any of claims 1 to 7, wherein the first return advice code is at least one of high risk, moderate risk, and low risk.

15. The server system as claimed in any of claims 12 to 14, wherein the server system is further caused, at least in part, to:

determine a total return amount (R) for the cardholder, and a total purchase amount (P) for the cardholder based, at least in part, on the plurality of transaction attributes related to the plurality of historical payment transactions performed between a plurality of cardholders and a plurality of merchants;

compute a set of ratios of R and P for the plurality of cardholders, each ratio of R and P of the set of ratios of R and P corresponding to each cardholder of the plurality of cardholders; and

extract a set of high ratios of R and P from the set of ratios of R and P based, at least in part, on a value associated with each ratio of R and P being at least equal to a threshold value; and optionally

wherein the server system is further caused, at least in part, to:

generate a bipartite graph for the plurality of historical payment transactions based, at least in part, on the plurality of transaction attributes and the set of high ratios of R and P, the bipartite graph comprising a first plurality of nodes and a first plurality of edges, the first plurality of nodes corresponds to the plurality of cardholders and the plurality of merchants, the first plurality of edges corresponding to set of high ratio of R and P; and

generate a homogeneous merchant graph based, at least in part, on the bipartite graph, the homogeneous merchant graph comprising a second plurality of nodes, the second plurality of nodes corresponds to the plurality of merchants; and further optionally

wherein the server system is further caused, at least in part, to:

generate a preference vector for each cardholder based, at least in part, on the set of high ratios of R and P, the preference vector corresponding to each cardholder indicating the past return behavior of each cardholder at the plurality of merchants;

generate a merchant correspondence matrix based, at least in part, on the set of high ratios of R and P and the homogeneous merchant graph; and

compute serial returnee likelihood data for the cardholder based, at least in part, on the homogeneous merchant graph, the preference vector corresponding to the cardholder, and the merchant correspondence matrix, wherein the serial returnee likelihood data indicates a likelihood that the cardholder associated with the ongoing transaction is a serial returnee, wherein the serial returnee likelihood data is one of the plurality of features.

FIG. 1

FIG. 2

BIPARTITE MERCHANT
CARDHOLDER GRAPH 302

HOMOGENEOUS MERCHANT
CARDHOLDER GRAPH 304

FIG. 3

RETURN PREDICTION MODEL

INPUTS
402

HIDDEN
LAYER
404

OUTPUT
LAYER
406

408

Z

σ (·)

410

412

P(Y/X)

400

FIG. 4

502    504    RETURN
PREDICTION
API REQUEST

508

SERVER
SYSTEM
200

RETURN
PREDICTION
MODEL 238

506

518

516

RETURN
ADVICE
CODE 514

RETURN
PROBABILITY
SCORE 510

MERCHANT

RETURN
PREDICTION
API RESPONSE

512

500

FIG. 5

FIG. 6

FIG. 7

GENERATE, BY A SERVER SYSTEM, A PREFERENCE VECTOR FOR EACH CARDHOLDER BASED, AT LEAST IN PART, ON THE SET OF HIGH RATIOS OF R AND P. IT IS NOTED THAT THE PREFERENCE VECTOR CORRESPONDS TO EACH CARDHOLDER INDICATING THE PAST RETURN BEHAVIOR OF EACH CARDHOLDER AT THE PLURALITY OF MERCHANTS

802

GENERATE, BY THE SERVER SYSTEM, A MERCHANT CORRESPONDENCE MATRIX BASED, AT LEAST IN PART, ON THE SET OF HIGH RATIOS OF R AND P AND THE HOMOGENEOUS MERCHANT GRAPH

804

COMPUTE, BY THE SERVER SYSTEM, SERIAL RETURNEE LIKELIHOOD DATA FOR THE CARDHOLDER BASED, AT LEAST IN PART, ON THE HOMOGENEOUS MERCHANT GRAPH, THE PREFERENCE VECTOR CORRESPONDING TO THE CARDHOLDER, AND THE MERCHANT CORRESPONDENCE MATRIX, WHEREIN THE SERIAL RETURNEE LIKELIHOOD DATA INDICATING A LIKELIHOOD THAT THE CARDHOLDER ASSOCIATED WITH THE ONGOING TRANSACTION IS A SERIAL RETURNEE, WHEREIN THE SERIAL RETURNEE LIKELIHOOD DATA IS ONE OF THE PLURALITY OF FEATURES

806

800

FIG. 8

902

RECEIVE, BY A SERVER SYSTEM, AN AUTHORIZATION REQUEST ASSOCIATED WITH AN ONGOING PAYMENT TRANSACTION INITIATED BY A CARDHOLDER WITH A MERCHANT, THE AUTHORIZATION REQUEST INCLUDING A PLURALITY OF ONGOING PAYMENT TRANSACTION ATTRIBUTES

904

ACCESS, BY THE SERVER SYSTEM, A HISTORICAL PAYMENT TRANSACTION DATASET FROM A DATABASE ASSOCIATED WITH THE SERVER SYSTEM, THE HISTORICAL PAYMENT TRANSACTION DATASET INCLUDING A PLURALITY OF TRANSACTION ATTRIBUTES RELATED TO A PLURALITY OF HISTORICAL PAYMENT TRANSACTIONS

906

GENERATE, BY THE SERVER SYSTEM, A PLURALITY OF FEATURES FOR THE CARDHOLDER BASED, AT LEAST IN PART, ON THE PLURALITY OF ONGOING PAYMENT TRANSACTION ATTRIBUTES AND THE PLURALITY OF TRANSACTION ATTRIBUTES

908

GENERATE, BY A RETURN PREDICTION MODEL ASSOCIATED WITH THE SERVER SYSTEM, A FIRST RETURN PROBABILITY SCORE ASSOCIATED WITH THE ONGOING PAYMENT TRANSACTION BASED, AT LEAST IN PART, ON THE PLURALITY OF FEATURES, THE FIRST RETURN PROBABILITY SCORE INDICATING A LIKELIHOOD OF THE ONGOING PAYMENT TRANSACTION BEING ASSOCIATED WITH A RETURN REQUEST WITHIN A PREDEFINED TIME INTERVAL

910

DETERMINE, BY THE SERVER SYSTEM, A FIRST RETURN ADVICE CODE FOR THE ONGOING PAYMENT TRANSACTION BASED, AT LEAST IN PART, ON THE FIRST RETURN PROBABILITY SCORE AND A SET OF PREDEFINED THRESHOLD VALUES

912

FACILITATING, BY A COMMUNICATION INTERFACE ASSOCIATED WITH THE SERVER SYSTEM, THE TRANSMISSION OF AN AUTHORIZATION RESPONSE MESSAGE INCLUDING THE RETURN ADVICE CODE TO AN ACQUIRER SERVER ASSOCIATED WITH THE MERCHANT SUCH AS THE MERCHANT

900

FIG. 9

RECEIVE, BY A SERVER SYSTEM, A RETURN PREDICTION REQUEST FOR A CHECKOUT PAYMENT TRANSACTION FROM A MERCHANT, THE RETURN PREDICTION REQUEST INCLUDING A PLURALITY OF CHECKOUT ATTRIBUTES ⌐1002

ACCESS, BY THE SERVER SYSTEM, A HISTORICAL PAYMENT TRANSACTION DATASET FROM A DATABASE ASSOCIATED WITH THE SERVER SYSTEM, THE HISTORICAL PAYMENT TRANSACTION DATASET INCLUDING A PLURALITY OF TRANSACTION ATTRIBUTES RELATED TO A PLURALITY OF HISTORICAL PAYMENT TRANSACTIONS ⌐1004

GENERATE, BY THE SERVER SYSTEM, A PLURALITY OF FEATURES FOR THE CARDHOLDER BASED, AT LEAST IN PART, ON THE PLURALITY OF CHECKOUT ATTRIBUTES AND THE PLURALITY OF TRANSACTION ATTRIBUTES ⌐1006

GENERATE, BY A RETURN PREDICTION MODEL ASSOCIATED WITH THE SERVER SYSTEM, A SECOND RETURN PROBABILITY SCORE ASSOCIATED WITH THE CHECKOUT PAYMENT TRANSACTION BASED, AT LEAST IN PART, ON THE PLURALITY OF FEATURES, THE SECOND RETURN PROBABILITY SCORE INDICATING A LIKELIHOOD OF THE CHECKOUT PAYMENT TRANSACTION BEING ASSOCIATED WITH A RETURN REQUEST WITHIN A PREDEFINED TIME INTERVAL ⌐1008

DETERMINE, BY THE SERVER SYSTEM, A SECOND RETURN ADVICE CODE FOR THE CHECKOUT PAYMENT TRANSACTION BASED, AT LEAST IN PART, ON THE SECOND RETURN PROBABILITY SCORE AND A SET OF PREDEFINED THRESHOLD VALUES ⌐1010

FACILITATE, BY A COMMUNICATION INTERFACE ASSOCIATED WITH THE SERVER SYSTEM, TRANSMISSION OF A RETURN PREDICTION RESPONSE MESSAGE INCLUDING THE SECOND RETURN ADVICE CODE TO AN ACQUIRER SERVER ASSOCIATED WITH THE MERCHANT ⌐1012

1000

FIG. 10

1102

RECEIVE, BY A SERVER SYSTEM, AN UPCOMING RETURN PREDICTION REQUEST FROM A MERCHANT FOR ONE OR MORE UPCOMING PAYMENT TRANSACTIONS TO BE INITIATED BY A CARDHOLDER WITH THE MERCHANT

1104

ACCESS, BY THE SERVER SYSTEM, A HISTORICAL PAYMENT TRANSACTION DATASET FROM A DATABASE ASSOCIATED WITH THE SERVER SYSTEM, THE HISTORICAL PAYMENT TRANSACTION DATASET INCLUDING PLURALITY OF TRANSACTION ATTRIBUTES RELATED TO A PLURALITY OF HISTORICAL PAYMENT TRANSACTIONS

1106

GENERATE, BY THE SERVER SYSTEM, A PLURALITY OF FEATURES FOR THE CARDHOLDER BASED, AT LEAST IN PART, ON THE PLURALITY OF TRANSACTION ATTRIBUTES

1108

GENERATE, BY A RETURN PREDICTION MODEL ASSOCIATED WITH THE SERVER SYSTEM, A THIRD RETURN PROBABILITY SCORE ASSOCIATED WITH THE ONE OR MORE UPCOMING PAYMENT TRANSACTIONS BASED, AT LEAST IN PART, ON THE PLURALITY OF FEATURES, THE THIRD RETURN PROBABILITY SCORE INDICATING A LIKELIHOOD OF THE ONE OR MORE UPCOMING PAYMENT TRANSACTION BEING ASSOCIATED WITH A RETURN REQUEST WITHIN A PREDEFINED TIME INTERVAL

1110

DETERMINE, BY THE SERVER SYSTEM, A THIRD RETURN ADVICE CODE FOR THE ONE OR MORE UPCOMING PAYMENT TRANSACTIONS BASED, AT LEAST IN PART, ON THE THIRD RETURN PROBABILITY SCORE AND A SET OF PREDEFINED THRESHOLD VALUES

1112

FACILITATE, BY A COMMUNICATION INTERFACE ASSOCIATED WITH THE SERVER SYSTEM, TRANSMISSION OF A RETURN PREDICTION RESPONSE MESSAGE INCLUDING THE THIRD RETURN ADVICE CODE TO AN ACQUIRER SERVER ASSOCIATED WITH THE MERCHANT

1100

FIG. 11

Europäisches
Patentamt
European
Patent Office
Office européen
des brevets

# EUROPEAN SEARCH REPORT

**Application Number**

EP 25 16 0427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/358507 A1 (PODUVAL PRANAV [IN] ET AL) 10 November 2022 (2022-11-10) <br> * paragraph [0006] - paragraph [0009] * <br> * paragraph [0030] - paragraph [0096] * <br> * paragraph [0129] - paragraph [0157] * <br> - - - - - | 1-15 | INV. <br> G06Q20/40 <br> G06N3/084 <br> G06N20/00 |
| A | US 2022/335429 A1 (DHAMA GAURAV [IN] ET AL) 20 October 2022 (2022-10-20) <br> * paragraph [0008] - paragraph [0013] * <br> * paragraph [0066] - paragraph [0096] * <br> - - - - - | 1-15 | |

**TECHNICAL FIELDS SEARCHED (IPC)**

G06N
G07G
G06Q

The present search report has been drawn up for all claims

| Place of search | Date of completion of the search | Examiner |
|---|---|---|
| The Hague | 27 May 2025 | Moynihan, Maurice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 0427

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | Publication date | Patent family member(s) | Publication date |
|---|---|---|---|
| US 2022358507 A1 | 10-11-2022 | US 2022358507 A1<br>US 2022358508 A1<br>US 2022366493 A1 | 10-11-2022<br>10-11-2022<br>17-11-2022 |
| US 2022335429 A1 | 20-10-2022 | NONE | |

EPO FORM P0459

For more details about this annex : see Official Journal of the European Patent Office, No. 12/82